# EUROPÄISCHE PATENTSCHRIFT

(11) **EP 1 851 408 B1**
(45) Veröffentlichungstag und Bekanntmachung des Hinweises auf die Patenterteilung: **25.05.2016**
(21) Anmeldenummer: 05825693.4
(22) Anmeldetag: 13.12.2005
(51) Int. Cl.: E05D 15/06, H02N 15/00, H02P 25/06, H02K 11/00, E05F 15/60, H02K 41/03

(54) **SCHIEBETÜR MIT EINEM MAGNETISCHEN ANTRIEBSSYSTEM MIT EINEM WEGMESSSYSTEM**
SLIDING DOOR COMPRISING A MAGNETIC DRIVE SYSTEM PROVIDED WITH A PATH MEASURING SYSTEM
PORTE COULISSANTE COMPRENANT UN SYSTÈME D'ENTRAINEMENT MAGNÉTIQUE ET UN SYSTÈME DE MÉSURE DE LA TRAJECTOIRE

(30) Priorität: 14.01.2005 DE 102005002046
(43) Veröffentlichungstag der Anmeldung: 07.11.2007
(73) Patentinhaber: DORMA Deutschland GmbH, 58256 Ennepetal (DE)
(72) Erfinder: BUSCH, Sven, 44139 Dortmund (DE)
(74) Vertreter: Balder IP Law, S.L.
(86) Internationale Anmeldenummer: PCT/EP2005/013396
(87) Internationale Veröffentlichungsnummer: WO 2006/074783

(56) Entgegenhaltungen:
- EP-A- 0 351 490
- EP-A- 0 433 830
- WO-A-94/13055
- DE-C1- 19 618 518
- PATENT ABSTRACTS OF JAPAN Bd. 1997, Nr. 02, 28. Februar 1997 (1997-02-28) -& JP 08 275493 A (MATSUSHITA ELECTRIC WORKS LTD), 18. Oktober 1996 (1996-10-18)

## Beschreibung

Die Erfindung betrifft eine Schiebetür mit einem magnetischen Antriebssystem mit einem Wegmesssystem. Das magnetische Antriebssystem weist eine Linear-Antriebseinheit mit mindestens einer Magnetreihe auf. Der Begriff der Magnetreihe umfasst auch längliche Einzelmagneten. Die Magnetreihe kann ortsfest oder ortsveränderlich angeordnet sein. Das magnetische Antriebssystem ist vorzugsweise als magnetisches Trag- und Antriebssystem ausgestaltet.

Aus der DE 40 16 948 A1 ist eine Schiebetürführung bekannt, bei der miteinander zusammenwirkende Magnete bei normaler Belastung eine berührungsfreie schwebende Führung eines in einer Schiebeführung gehaltenen Türflügels oder dergleichen bewirken, wobei neben den stationär angeordneten Magneten der Schiebeführung ein Ständer eines Linearmotors angeordnet ist, dessen Läufer an der Schiebetür angeordnet ist. Durch die gewählte V-förmige Anordnung der Permanentmagnete der offenbarten permanent erregten magnetischen Trageinrichtung kann keine seitlich stabile Führungsbahn realisiert werden, weswegen eine relativ komplizierte Anordnung und Ausgestaltung von Ständer und Läufer erforderlich ist.

Aus der WO 00/50719 A1 ist ein kombiniertes Lager- und Antriebssystem für eine automatisch betriebene Tür bekannt, bei der ein permanent erregtes magnetisches Tragsystem symmetrisch aufgebaut ist und ortsfeste und ortsveränderbare Magnetreihen aufweist, die jeweils in einer Ebene angeordnet sind, wobei sich das Tragsystem in einem labilen Gleichgewicht befindet, und bei dem das Tragsystem symmetrisch angeordnete seitliche Führungselemente aufweist, die rollenförmig gelagert sein können. Aufgrund der hierdurch erreichten seitlich stabilen Führungsbahn ergibt sich eine einfache Ausgestaltung und Anordnung von Ständer und Läufer eines in einem gemeinsamen Gehäuse untergebrachten Linearmotors, nämlich die Möglichkeit, Ständer und Läufer des Linearmotors in Bezug auf das Tragsystem beliebig anordnen zu können und hinsichtlich der Formgebung von Ständer und Läufer nicht durch das Tragsystem beschränkt zu sein.

Diesen beiden Lagersystemen gemeinsam ist, dass sie nach dem Prinzip der abstoßenden Kraftwirkung arbeiten, welches Wirkprinzip einen stabilen Schwebezustand ohne aufwendige elektrische Regeleinrichtung ermöglicht. Nachteilig hieran ist jedoch, dass sowohl mindestens eine ortsfeste als auch mindestens eine ortsveränderbare Magnetreihe vorhanden sein müssen, d.h., über den gesamten Weg der Schiebeführung bzw. des Lagers der automatisch betriebenen Tür und an dem entlang dieser Führung beweglichen Tragschlitten für die Tür Magnete angeordnet sein müssen, wodurch sich ein solches System, das sich aufgrund des Wegfalls der mechanischen Reibung zum Tragen der Tür durch extreme Leichtgängigkeit und geräuschlose Arbeitsweise auszeichnet und nahezu verschleiß- und wartungsfrei ist, in der Herstellung sehr teuer wird.

Aus der DE 196 18 518 C1 ist weiter ein elektromagnetisches Antriebssystem für magnetische Schwebe- und Tragsysteme bekannt, bei dem durch eine geeignete Anordnung von Dauermagnet und ferromagnetischem Material ein stabiler Schwebe- und Tragzustand erreicht wird. Hierzu versetzt der Dauermagnet das ferromagnetische Material in den Zustand einer magnetischen Teilsättigung. Elektromagnete sind so angeordnet, dass die Dauermagneten allein durch eine Änderung der Sättigung in der Tragschiene bewegt werden, und die Spulenkerne sind in die dauermagnetische Teilsättigung, die zum Schwebe- und Tragezustand führt, mit einbezogen.

Weiter zeigt die WO 94/13055 einen Ständerantrieb für einen elektrischen Linearantrieb und eine mit einem solchen Ständer versehene Tür, die mittels Magneten im Türsturz eines Rahmens aufgehängt ist. Hierfür sind an der Türfüllung mehrere Magnete oder Magnetgruppen angeordnet, deren magnetische Feldstärke so groß ist, dass eine Anziehungskraft zu einer Führungsplatte erreicht wird, die an der Unterseite des Türsturzes angeordnet ist, wobei die Anziehungskraft ausreicht, um das Gewicht der Tür anzuheben.

Den beiden in diesen Druckschriften beschriebenen Systemen ist gemeinsam, dass ein Anbacken der Magnete an dem ferromagnetischen Material mittels Rollen verhindert wird, also ein Luftspalt zwischen den Magneten und dem ferromagnetischen Material mittels Rollen eingestellt wird. Diese Rollen müssen bei den gewählten Anordnungen große Kräfte aufnehmen, da die magnetische Feldstärke nicht so gewählt werden kann, dass lediglich die jeweilige magnetisch aufgehängte Tür gehalten wird, sondern aufgrund von Sicherheitsbestimmungen eine bestimmte zusätzliche Tragkraft vorhanden sein muss, damit die Tür nicht ungewollt abfällt. Demzufolge müssen die Rollen ähnlich ausgelegt werden, wie bei rein rollengelagerten Schiebetüren, was dazu führt, dass eine mechanische Reibung zum Einstellen des Luftspalts vorhanden ist. Diese hebt die extreme Leichtgängigkeit und geräuschlose Arbeitsweise der nach dem abstoßenden Kraftprinzip arbeitenden Lagerung auf und führt zu Verschleiß und Wartung. Dazu kommt, dass die magnetische Anziehungskraft schon während der Herstellung präzise auf die jeweilige zu tragende Last eingestellt werden muss, wodurch diese Systeme für den praktischen Einsatz ungeeignet oder zu teuer sind.

Weiter führen diese Druckschriften zwar die Verwendung eines mit einer magnetischen Trageinrichtung gekoppelten oder integrierten Linearantriebs auf, die Ausgestaltung eines solchen Linearantriebs oder dessen Ansteuerung sind jedoch nicht beschrieben.

Für den Betrieb eines Linearmotor-Schiebtürantriebes ist ein Meßsystem zur Erfassung der aktuellen Türflügel- bzw. Läuferposition für mehrere Aufgaben notwendig:
1. Die Läuferposition wird erfasst, damit die Phasenspannung in Abhängigkeit von der Läuferposition zur Kommutierung der Stators derart variiert werden kann, dass ein kontinuierlicher Motorschub entsteht. Vorzugweise wird die Spannung sinusförmig moduliert.
2. Für die Türgeschwindigkeitsregelung wird der Verfahrweg gemessen.
3. Für die Türgeschwindigkeitsregelung und Hinderniserkennung wird die Türgeschwindigkeit aus dem Positionssignal abgeleitet.
4. Die Endlagenerkennung und eine Messung des möglichen Verfahrweges erfolgen in einer Referenzfahrt.

Bei Linearmotoren sind unterschiedliche analoge und inkrementale Wegmessverfahren bekannt, die in der Regel als vom Linearmotor unabhängige Systeme ausgebildet sind, so dass deren Messergebnisse für die Kommutierung auf das Motoraster umgerechnet werden muss. Weiterhin muss mittels einer Läuferlagensuche zunächst ein Bezug zwischen elektrischer Phasenlage und gemessener Läuferposition ermittelt werden.

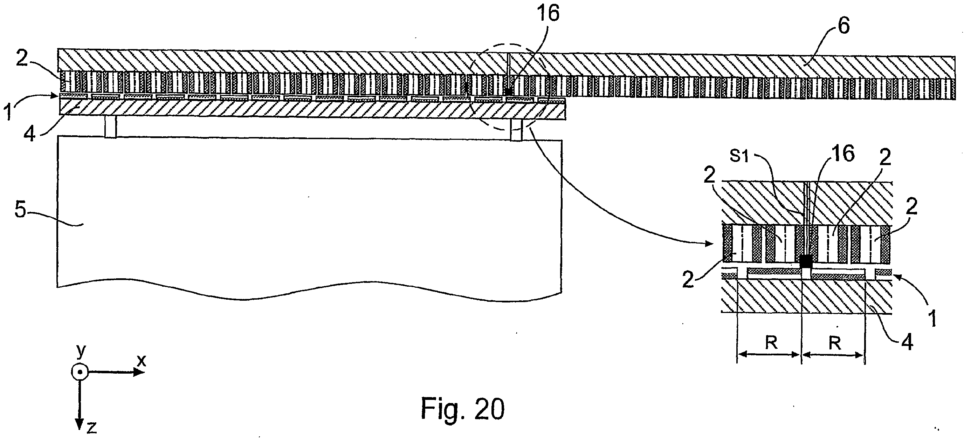

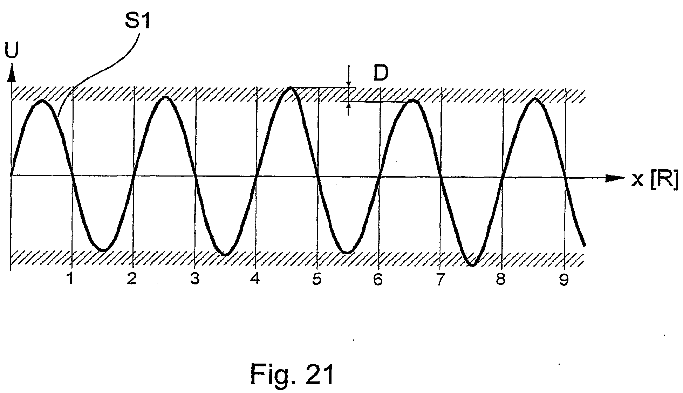

Weiterhin bekannt ist, dass die Dauermagnet-Reihe des Läufers mittels eines Hall-Sensors oder eines anderen magnetisch sensitiven elektrischen Sensors abgetastet werden kann. Ein hierfür geeignetes System ist in der Figur 20 gezeigt, bei dem in der Mitte von Einzelspulen 2 des Ständers in Fahrtrichtung x gesehen als Positionssensor dienender Hall-Sensor 16 angeordnet ist, der ein Signal S1 abgibt, das durch das Verfahren der Einzelmagnete der Magnetreihe 1, die einen Polabstand R aufweisen, entlang des Hall-Sensors 16 erzeugt wird. Dieses Signal ist in der Figur 21 gezeigt

Die Vorteile eines solchen Wegmesssystems gegenüber vom Linearmotor unabhängigen Systemen sind:
1. Kostenvorteil, da der Magnetmaßstab schon vorhanden ist und Hall-Sensoren relativ preiswert sind.
2. Auf die Läuferlagensuche kann verzichtet werden, da durch die Montageposition des Hall-Sensors ein fester Zusammenhang zwischen Messsignal der Läuferposition und Spulenpositionen des Stators des Linearmotors besteht. Durch die fest, geometrische Zuordnung ist weiterhin ein Verlieren des Positionsbezuges, wie es bei externen Systemen möglich ist, ausgeschlossen.

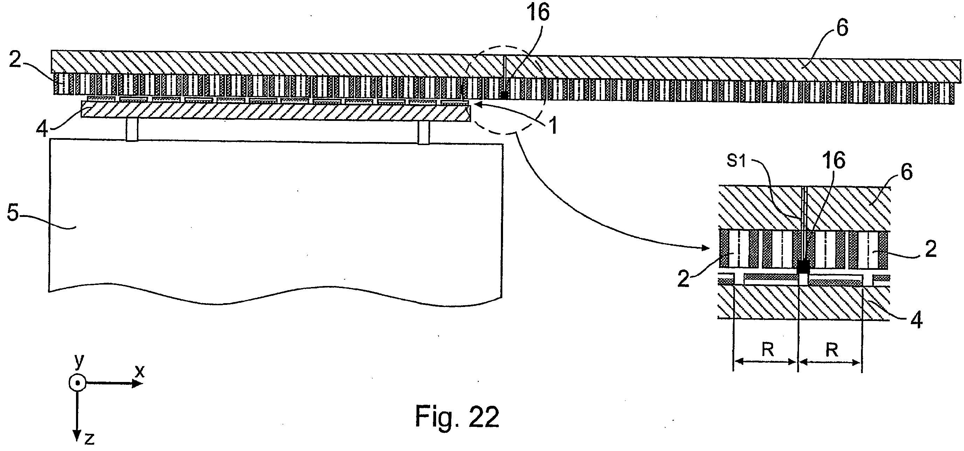

Die Nachteile beim Einsatz eines Hall-Sensors zur Wegerfassung können sein:
1. Die Länge der Magnetreihe auf dem Läufer kann konstruktionsbedingt kürzer sein als der Verfahrweg der Tür, so dass sich der Läufer aus dem Messbereich bewegt, wie es in der Figur 22 gezeigt ist.
2. Die maximalen Feldstärken der einzelnen Magnet einer Magnetreihe weisen aufgrund geometrischer Tolleranzen zwischen den Dauermagnete, differierender Materialeigenschaften und Qualität deutliche Abweichungen auf, so dass die Auswertung erschwert wird und das Messergebnis ungenau ist. Das in der Figur 21 gezeigte Ausgangssignal S1 des Hall-Sensors 16 zeigt z.B. eine Amplitudendifferenz D zwischen dem dritten und dem vierten Maximum, die durch diese Effekte entsteht.
3. Der Messwertverlauf in Abhängigkeit von der Läuferposition ist von der Magnetanordnung, der Sensorwahl und Sensorposition abhängig. Das Ausgangssignal des Positionssensors ist in der Regel nur einer SinusFunktion ähnlich, wie es deutlich bei dem in der Figur 21 gezeigten Ausgangssignal S1 des Hall-Sensors 16 erkannt werden kann.
4. Nur die steilen Anteile der sinusähnlichen Ergebnisfunktion des Hall-Sensors 16 lassen sich mit ausreichender Genauigkeit analog auswerten. In den Bereichen geringer Steigung, der Maxima und der Minima des Funktionsverlaufes ist eine analoge Funktionsauswertung nicht möglich, wie es deutlich bei dem in der Figur 21 gezeigten Ausgangssignal S1 des Hall-Sensors 16 erkannt werden kann.
5. Bei eingeschaltetem Motor werden den Feldern der Einzelmagnete der Magnetreihe 1 die Felder der Antriebsspulen überlagert, so dass die Magnetfelder der Einzelmagnete der Magnetreihe 1 gestört und das Messergebnis verfälscht wird.

Es ist daher die Aufgabe der Erfindung, eine Schiebetür mit einem magnetischen Antriebssystem für mindestens einen Türflügel, das eine Linearantriebseinheit mit mindestens einer Magnetreihe und einem mit dieser als Magnetmaßstab arbeitenden Wegmesssystem mit einem Positionssensor aufweist, so weiterzuentwickeln, dass die zuvor genannten Vorteile bei geringen Herstellungskosten bestehen bleiben und eine sichere und zuverlässige Positionserkennung gewährleistet ist.

Gelöst wird diese Aufgabe durch eine Schiebetür mit den im Patentanspruch 1 angegebenen Merkmalen. Vorteilhafte Ausgestaltungen des Gegenstandes des Patentanspruchs 1 sind in den Unteransprüchen angegeben.

Die erfindungsgemäße Schiebetür umfasst ein magnetisches Antriebssystem für mindestens einen Türflügel, mit einer in Antriebsrichtung angeordneten Magnetreihe, deren Magnetisierung in ihrer Längsrichtung in bestimmten Abständen das Vorzeichen wechselt, und einem mit der Magnetreihe verbundenen Tragschlitten, an dem der Türflügel befestigt werden kann, sowie mit einer aus mehreren Einzelspulen und Spulenkernen bestehende Spulenanordnung, die bei entsprechender Ansteuerung der Einzelspulen eine Wechselwirkung mit der Magnetreihe bewirkt, die Vorschubkräfte hervorruft, und einem mit der Magnetreihe als Magnetmaßstab arbeitenden Wegmesssystem mit einem ersten magnetisch sensitiven Positionssensor, wobei das Wegmesssystem einen zweiten magnetisch sensitiven Positionssensor aufweist, dessen Abstand zu dem ersten Positionssensor größer ist, als die Differenz zwischen der Länge der Magnetreihe und dem Verfahrweg der Schiebetür und der kleiner ist, als die Länge der Magnetreihe.

Durch das Verwenden von mindestens zwei Positionssensoren, die jeweils mehrere Einzelsensoren umfassen können, wird der Verfahrweg erfindungsgemäß in mindestens zwei Messbereiche unterteilt, so dass auch Verfahrwege der Tür möglich sind, die länger sind, als die Länge der Magnetreihe des Läufers.

Bevor die Magnetreihe des Läufers den Messbereich eines Positionssensors verlassen hat, wird die Wegmessung erfindungsgemäß von einem zweiten Positionssensor übernommen, da der Abstand der beiden magnetisch sensitiven Positionssensoren kleiner ist, als die Länge der Magnetreihe des Läufers.

Die Umschaltung und Synchronisation der Sensoren erfolgt mittels einer Elektronik des Wegmesssystemes. Hierbei kann Umschaltung und Synchronisation mittels einer Hardwareschaltung oder mittels entsprechender Software durch einen Mikrocontroller realisiert werden.

Bei der erfindungsgemäßen Schiebetür ist vorzugsweise der Abstand zwischen dem ersten Positionssensor und dem zweiten Positionssensor mindestens um einen Magnetpolabstand zwischen zwei Einzelmagneten der Magnetreihe größer, als die Differenz zwischen der Länge der Magnetreihe und dem Verfahrweg der Schiebetür und mindestens um einen Magnetpolabstand zwischen zwei Einzelmagneten der Magnetreihe kleiner, als die Länge der Magnetreihe. Durch diese vorzugsweise erfolgende Wahl des Abstands zwischen zwei Positionssensoren wird erfindungsgemäß eine sichere Überdeckung der mindestens zwei Messbereiche erreicht.

Bei der erfindungsgemäßen Schiebetür beträgt der Abstand zwischen dem ersten Positionssensor und dem zweiten Positionssensor alternativ oder zusätzlich vorzugsweise ein Mehrfaches eines Magnetpolabstandes zwischen zwei Einzelmagneten der Magnetreihe und gleichzeitig ein Mehrfaches eines Spulenabstandes zwischen zwei Einzelspulen. Hierdurch erzeugen beide magnetisch sensitiven Positiönssensoren passend zur jeweiligen Spulengruppe die gleichen Messsignale, wodurch bei der Auswertung und Synchronisation der mindestens zwei Positionssensoren eine sonst notwendige aufwendige Synchronisation und Umrechung der Wegsignale entfällt. Weiterhin wird durch die feste Zuordnung von Sensoren und Phasenlage der Einzelspulen ein Höchstmaß an Funktionssicherheit erzielt.

Erfindungsgemäß werden als magnetisch sensitive Positionssensoren vorzugsweise Hall-Sensoren und/oder magnetoresistive Sensoren verwendet.

In der erfindungsgemäßen Schiebetür bestehen die magnetisch sensitiven Positionssensoren vorzugsweise jeweils aus mehreren magnetisch sensitiven Einzelsensoren, weiter vorzugsweise aus zwei oder drei Einzelsensoren.

Die magnetisch sensitiven Einzelsensoren eines magnetisch sensitiven Positionssensors weisen erfindungsgemäß vorzugsweise untereinander einen solchen festen Abstand auf, dass immer mindestens einer der Einzelsensoren einen steilen Funktionsverlauf zeigt. Für die Erzeugung eines genauen, kontinuierlichen Wegsignals werden die Ausgangsignale der magnetisch sensitiven Sensoren in dieser erfindungsgemäßen bevorzugten Ausführungsform dann derart ausgewertet, dass vorrangig nur die Bereiche großer Steigung des Ausgangssignales zur Auswertung herangezogen werden. Bei günstiger Abstandswahl der Sensoren kann aus den einzelnen Ausgangssignalen ein neues verbessertes Gesamtsignal zusammengesetzt werden. Das Zusammensetzen der Signalverläufe der Einzelsensoren eines Positionssensors zu einem verbesserten Gesamtsignal erfolgt mittels der Elektronik des Wegmesssystemes. Hierbei besteht eine einfachste Möglichkeit darin jeweils die Messwerte der jeweiligen Ausgangssignale für das verbesserte Gesamtsignal zu nutzen, die näher zur Mittellage (in der Regel 0-Lage) der periodischen Ausgangssignale liegen.

Alternativ oder zusätzlich entspricht erfindungsgemäß vorzugsweise die Anzahl der magnetisch sensitiven Einzelsensoren jedes magnetisch sensitiven Positionssensors mindestens der Anzahl der elektrischen Phasen des Antriebssystems. In dieser Ausführungsform läuft die Wiederholfrequenz des Ausgangsignals mit der Frequenz der zu erzeugend sinusförmigen Motorspannung synchron. Der Einsatz von zwei oder vier Einzelsensoren pro Positionssensor ist besonders bei zwei- oder vier-phasigen Antriebsmotoren geeignet. Bei dem besonders vorteilhaften dreiphasigen Antriebsmotor ist der Einsatz von mindestes drei Einzelsensoren pro Positionssensor besonders vorteilhaft.

Weiter alternativ oder zusätzlich weisen erfindungsgemäß vorzugsweise die magnetisch sensitiven Einzelsensoren eines magnetisch sensitiven .Positionssensors untereinander einen festen Abstand auf, der gleich dem Quotienten aus Magnetpolabstand zwischen zwei Einzelmagneten der Magnetreihe und der Anzahl der in dem Positionssensor genutzten Einzelsensoren oder einem Mehrfachen davon ist.

Diese Wahl des Abstandes der Einzelsensoren vorzugsweise gleich dem Polabstand R der Einzelmagnete der Magnetreihe (Abstand zwischen den Mittelpunkten zweier benachbarter Magnete) geteilt durch die Anzahl der in einem Positionssensor genutzten Einzelsensoren oder ein mehrfaches dieses Abstandes ist besonders vorteilhaft, da sich ein besonders gut auswertbares Gesamtsignal ergibt.

Bei einem zwei- oder vier-phasigen Antriebsmotor ist ein Abstand S der Einzelsensoren eines Positionssensors von *S=R·n·½* mit *n=*{1*,*2,3...} und mit dem Polabstandes R vorteilhaft, da bei diesem Abstand bei in den Bereichen der lokalen Maxima eines Ausgangssignals des einen Einzelsensorsensors (kleine Steigung) das Ausgangsignal des jeweils anderen Einzelsensorsensor seine größte Steigung im 0-Durchgang hat und umgekehrt.

Bei dem besonders vorteilhaften dreiphasigen Antriebsmotor ist der Abstand S zwischen zwei benachbarten Einzelsensoren eines Positionssensors von *S*=*R*·{⅓, ²/₃, ⁴/₃, ⁵/₃...} bei dem Polabstandes R vorteilhaft. Insbesondere bei einem Abstand zwischen zwei Einzelsensoren von *S* = *R·*²/₃ ergibt sich ein sehr gleichmäßiges, abschnittsweise nahezu lineares Ausgangsignal, das synchron zur Weiterschaltfrequenz eines 3-phasigen Linearmotors verläuft.

In der erfindungsgemäßen Schiebetür messen die magnetisch sensitiven Positionssensoren vorzugsweise unabhängig von der Feldstärke nur die Feldrichtung. Hierfür werden erfindungsgemäß weiter vorzugsweise magnetoresistive Positionssensoren verwendet.

Die Feldrichtung ist im Vergleich zu Feldstärke weit weniger durch die Tolleranzen der Magnete beeinflusst, so dass durch diese erfindungsgemäße Weiterbildung ein präziseres Wegsignal abgetastet werden kann. Weiterhin können spezielle Positionssensoren eingesetzt werden, die sowohl bei 0°, 90°, 180° und 270° Feldrichtung zur Sensoroberfläche einen Nulldurchgang des Ausgangssignals zeigen und bei ca. 45°, 135°, 225° und 315° jeweils eine maximale oder minimale Messspannung anzeigen. Bei solchen Sensoren wird im Vergleich zu feldstärkenabhängigen Sensoren eine doppelt so große Messauflösung erreicht. Die Abstände solcher Einzelsensoren in einem Positionssensor kann vorteilhaft auf die Hälfte der zuvor beschrieben Abstände reduziert werden.

Die erfindungsgemäße Schiebetür weist vorzugsweise weiter magnetisch leitende Rückschlusskörper auf, die einen Feldschluss der Einzelmagnete der Magnetreihe über die magnetisch sensitiven Positionssensoren verbessern. Die magnetisch leitenden Rückschlusskörper bestehen erfindungsgemäß weiter vorzugsweise aus einem weichmagnetischen Werkstoff.

Diese bevorzugte Ausgestaltung der erfindungsgemäßen Schiebetür erzeugt eine feldverstärkende Wirkung im Bereich der Positionssensoren.

Der vorzugsweise verwendete weichmagnetische Werkstoff des Rückschlusskörpers kann z.B. Eisen oder Stahl sein.

Da die Felder der Spulen durch den Rückschlusskörper nicht in gleicher Weise verstärkt werden, wird das Wegsignal der Einzelmagnete verbessert. Besonders günstig ist die Anordnung von magnetisch sensitivem Positionssensor und Rückschlusskörper zwischen den Einzelspulen oder seitlich der Einzelspulen. Der magnetisch sensitive Positionssensor kann sowohl direkt gegenüber den Einzelmagneten der Magnetreihe im Bereich des Luftspaltes oder zwischen den Rückschlusskörpern angeordnet sein. Letzteres reduziert den Effekt der Feldrichtung auf die gemessene Feldstärke, da die Feldrichtung zwischen zwei feststehenden Rückschlusskörpern nahezu unabhängig von der Läuferposition ist.

Die erfindungsgemäße Schiebetür weist vorzugsweise weiter alternativ oder zusätzlich Abschirmungselemente auf, die die magnetisch sensitiven Positionssensoren derart umhüllen, dass eine Störwirkung von Streufeldern der Einzelspulen auf die magnetisch sensitiven Positionssensoren reduziert wird. Die Abschirmungselemente bestehen erfindungsgemäß weiter vorzugsweise aus einem magnetfeldleitendem Werkstoff, wie Eisen oder Stahl. Erfindungsgemäß kann ein solches abschirmendes Bauteil den Sensor ganz oder teilweise umgeben und mit einer Öffnung zu den Dauermagneten zeigen.

Die Magnetfelder der Spulen werden durch ein solches Abschirmungselement weit stärker um den Positionssensor herumgeführt, als die Felder der Einzelmagnete der Magnetreihe des Läufers, da die Öffnung der abschirmenden Umhausung in Richtung der Einzelmagnete geöffnet ist.

Alternativ oder zusätzlich ist die Spulenanordnung von Einzelspulen der erfindungsgemäßen Schiebetür vorzugsweise im Nahbereich der magnetisch sensitiven Positionssensoren unterbrochen. Die Einzelspulen der Spulenanordnung, also die elektromagnetischen Antriebsspulen des Stators, erstrecken sich in der Regel über eine größere Länge und deren Phasenmuster wiederholt sich mehrfach, so dass das Weglassen einzelner Einzelspulen bzw. einer Spulengruppe (je eine Einzelspule jeder Phasenlage) keinen nennenswerte Wirkung auf den Antriebsschub hat.

Weiter alternativ oder zusätzlich ist die Spulenanordnung von Einzelspulen der erfindungsgemäßen Schiebetür mit einem Abstand zu den magnetisch sensitiven Positionssensoren zwischen den magnetisch sensitiven Positionssensoren angeordnet. Diese erfindungsgemäße Ausgestaltung ist eine besonders einfache Möglichkeit das Problem der von den Antriebsspulen entstehen Störfelder zu vermeiden. Damit sich der Läufer bei dieser Anordnung der Positionssensoren mit ausreichendem Abstand vor und hinter den Einzelspulen der Spulenanordnung, also dem Stator, jedoch zu keinem Zeitpunkt aus dem Erfassungsbereich der beiden Positionssensoren bewegen kann, muss der Abstand der Positionssensoren kleiner als die Länge der Magnetreihe des Läufers sein. Hierdurch bedingt muss der Stator noch etwas kürzer als dieser Sensorabstand sein. Daher eignet sich dieses Ausführungsform besonders bei Einsatz eines relativ kurzen Stators

Diese letzten vier bevorzugten Ausgestaltungen der Erfindung, also die Verwendung von Rückschlusskörpern, Abschirmungselementen, die Unterbrechung der Spulenanordnung im Bereich der Positionssensoren und die Verwendung eines kurzen zwischen den Positionssensoren angeordneten Stators, die alternativ oder in beliebiger gemeinsamer Kombination ausgeführt werden können wird ein die Wegmessung z.T. erheblich störender Effekt der Magnetfelder der elektromagnetischen Antriebsspulen des Schiebtürantriebs vermindert oder vollständig ausgeblendet.

Die erfindungsgemäße Schiebetür weist vorzugsweise weiter für jeden Türflügel eine mit der Magnetreihe verbundene Rollenanordnung auf, die bezüglich des Türflügels eine Tragfunktion erfüllt und einen bestimmten spaltförmigen Abstand zwischen der Magnetreihe und den Spulenkernen gewährleistet.

Durch eine solche Auslegung des magnetischen Antriebssystemes als magnetisches Trag- und Antriebssystem, bei dem die erforderliche Tragkraft teilweise von dem magnetischen Trag- und Antriebssystem und teilweise von der Rollenanordnung aufgenommen wird, wird gegenüber dem Stand der Technik der Vorteil erzielt, dass die Rollenanordnung weder die gesamte Last des Türflügels tragen muss, noch eine aufgrund von Sicherheitsbestimmungen erforderliche große Tragkraft bei rein mittels Magneten aufgehängten Türflügeln aufnehmen muss. Hierdurch werden gegenüber einer reinen Rollenlagerung bzw. einer durch Rollen abgestützten Magnetaufhängung die folgenden Vorteile erreicht: größere Lebensdauer der Rollen, Reduzierung der Rollengröße und damit eine Bauraumreduktion bezüglich der Rollenlagerung, und eine Reduzierung der Rollengeräusche, Reduzierung des Rollwiderstandes bzw. der Rollreibung. Weiter ergeben sich bei dieser Ausgestaltung der erfindungsgemäßen Schiebetür gegenüber einer mit einem rein magnetischen Trag- und Führungssystem die Vorteile, dass die Tragkraftkennlinien-Steifigkeit bei der Auslegung des Systemes nicht berücksichtigt werden braucht, beim Beschleunigen und Abbremsen keine Wankbewegungen der getragenen Last, z.B. des Türflügels, entstehen, und dass unterschiedliche Auslenkungen bei unterschiedlichen Türflügelgewichten nicht zwingend berücksichtigt bzw. kompensiert werden müssen. Weiter kann das so ausgestaltete erfindungsgemäße magnetische Trag- und Antriebssystem für mindestens einen Türflügel ohne Berücksichtigung der tatsächlichen späteren Verwendung ohne Unterschiede in Serie gefertigt werden, d.h. ohne einen bei der Fertigung erforderlichen Abgleich an das später zu tragende Gewicht.

Aus diesen Gründen ist erfindungsgemäß bei einer solchen nach dem anziehenden Kraftprinzip arbeitenden Lagerung eine sehr gute Leichtgängigkeit und geräuschlose Arbeitsweise gegeben, wobei aufgrund der eingesetzten Rollenanordnung, welche den bestimmten spaltförmigen Abstand zwischen der Magnetreihe und der Spulenanordnung gewährleistet, trotz Ausnutzung eines instabilen Gleichgewichtszustandes keine elektrische oder elektronische Regeleinrichtung vorgesehen zu werden braucht. Ein spaltförmiger Abstand im Sinne dieser Erfindung ist ein Abstand zwischen zwei parallelen oder wenig gegeneinander geneigten Flächen. Hier insbesondere zwischen einer Polfläche einer der (mindestens einen) Magnetreihe und einer dieser gegenüberliegend im Wesentlichen parallel dazu angeordneten Fläche der Spulenkerne der Spulenanordnung.

Bei der erfindungsgemäßen Trageinrichtung ist die Magnetreihe vorzugsweise parallel zur Tragrichtung und quer zur Antriebsrichtung magnetisiert.

Nach der Erfindung besteht die Magnetreihe vorzugsweise aus einem oder mehreren Hochleistungsmagneten, vorzugsweise Seltenenerden-Hochleistungsmagneten, weiter vorzugsweise aus Neodym-Eisen-Bor (NeFeB) bzw. Samarium-Cobalt (Sm₂Co) oder kunststoffgebundenen Magnetwerkstoffen. Durch die Verwendung von solchen Hochleistungsmagneten lassen sich wegen der höheren Remanenzinduktion wesentlich höhere Kraftdichten erzeugen als mit Ferrit-Magneten. Demzufolge lässt sich das Magnetsystem bei gegebener Tragkraft mit Hochleistungsmagneten geometrisch klein und damit platzsparend aufbauen. Die gegenüber Ferrit-Magneten höheren Materialkosten der Hochleistungsmagnete werden durch das vergleichsweise geringe Magnetvolumen zumindest kompensiert.

Das erfindungsgemäße Antriebssystem oder kombinierte Trag- und Antriebssystem wird zum Antrieb mindestens eines Türflügels einer Schiebetür eingesetzt, die vorzugsweise als Bogenschiebetür oder Horizontal-Schiebewand ausgebildet ist. Es kann neben diesem Einsatz auch zum Antrieb von Torflügeln oder in Zuführeinrichtungen, Handlingseinrichtungen oder Transportsystemen eingesetzt werden.

Die Erfindung wird nun anhand von schematisch dargestellten Ausführungsbeispielen näher beschrieben. Dabei zeigen:
- Fig. 1: eine Längsschnittdarstellung des erfindungsgemäß prinzipiell verwendeten kombinierten Trag- und Antriebssystemes,
- Fig. 2: eine elektrische Verschaltung der Spulen der Linear-Antriebseinheit des in Fig. 1 gezeigten kombinierten Trag- und Antriebssystemes,
- Fig. 3: ein Diagramm zur Erläuterung einer ersten Möglichkeit des Spannungsverlaufes an den wie in Fig. 2 gezeigt verschalteten Spulen des erfindungsgemäß verwendeten Antriebssystemes,
- Fig. 4: ein Diagramm zur Erläuterung einer zweiten Möglichkeit des Spannungsverlaufes an den wie in Fig. 2 gezeigt verschalteten Spulen des erfindungsgemäß verwendeten Antriebssystemes,
- Fig. 5: ein Diagramm zur Erläuterung einer dritten Möglichkeit des Spannungsverlaufes an den wie in Fig. 2 gezeigt verschalteten Spulen des erfindungsgemäß verwendeten Antriebssystemes,
- Fig. 6: eine Querschnittsdarstellung einer Schiebetür nach einer bevorzugten Ausführungsform nach der Erfindung,
- Fig. 7: eine erste bevorzugte Ausführungsform der Anordnung von Positionssensoren nach der Erfindung,
- Fig. 8: eine zweite bevorzugte Ausführungsform der Anordnung von Positionssensoren nach der Erfindung,
- Fig. 9: eine dritte bevorzugte Ausführungsform der Anordnung von Positionssensoren nach der Erfindung,
- Fig. 10: eine vierte bevorzugte Ausführungsform der Anordnung von Positionssensoren nach der Erfindung,
- Fig. 11: ein Ausgangssignal eines Positionssensors nach der Erfindung,
- Fig. 12: Ausgangssignale von zwei Einzelsensoren eines Positionssensors nach der Erfindung und ein resultierendes Signal des aus zwei Einzelsensoren bestehenden Positionssensors,
- Fig. 13: Ausgangssignale von drei Einzelsensoren eines Positionssensors nach der Erfindung und ein resultierendes Signal des aus drei Einzelsensoren bestehenden Positionssensors,
- Fig. 14: Ausgangssignale von drei Einzelsensoren eines Positionssensors nach der Erfindung und ein resultierendes Signal des aus drei Einzelsensoren bestehenden Positionssensors,
- Fig. 15: eine fünfte bevorzugte Ausführungsform der Anordnung von Positionssensoren nach der Erfindung,
- Fig. 16: eine sechste bevorzugte Ausführungsform der Anordnung von Positionssensoren nach der Erfindung,
- Fig. 17: die Verwendung von magnetfeldleitenden Rückschlusskörpern nach einer ersten Ausgestaltung der Erfindung,
- Fig. 18: die Verwendung von magnetfeldleitenden Rückschlusskörpern nach einer zweiten Ausgestaltung der Erfindung,
- Fig. 19: die Verwendung von Abschirmungselementen nach der Erfindung,
- Fig. 20: eine erste Ausführungsform der Anordnung von Positionssensoren nach dem Stand der Technik,
- Fig. 21: eine Ausgangssignal eines Positionssensors nach dem Stand der Technik, und
- Fig. 22: eine zweite Ausführungsform der Anordnung von Positionssensoren nach dem Stand der Technik.

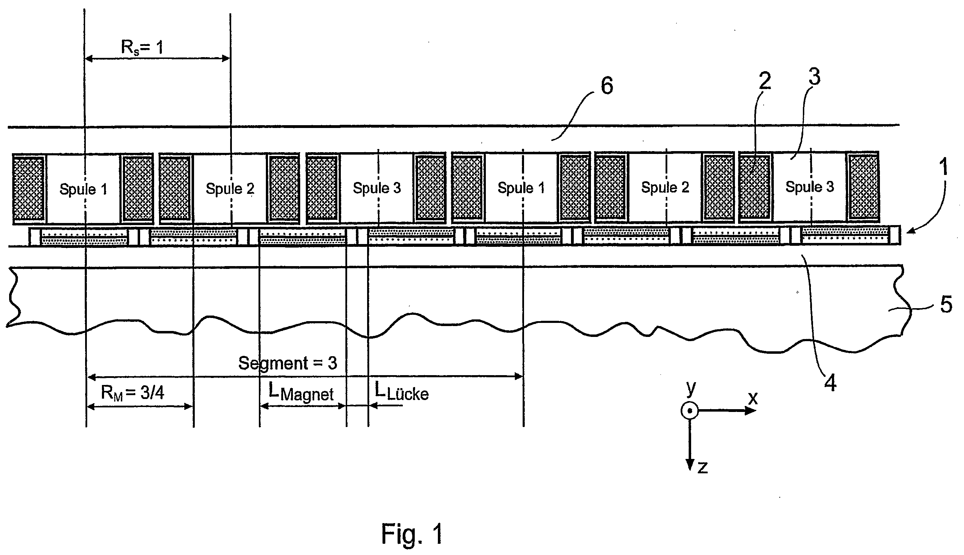

Die Fig. 1 zeigt eine schematische Prinzipdarstellung von zwei Antriebssegmenten eines erfindungsgemäß bevorzugt verwendeten Antriebssystemes, hier als kombiniertes magnetisches Trag- und Antriebssystem, in einem Längsschnitt, bei der der erfindungsgemäß verwendete magnetische Linearantrieb auf die Magnetreihe 1 wirkt, die an einem Tragschlitten 4 befestigt ist, welcher einen Türflügel 5 hält. Die Magnetreihe 1 ist an einem Tragprofil 6 befestigt und weist jeweils abwechselnd polarisierte Einzelmagnete auf. In Tragrichtung oberhalb der Magnetreihe 1 sind mit einem bestimmten spaltförmigen Abstand Spulen 2 so angeordnet, dass sich ein jeweiliger Spulenkern 3 in Tragrichtung, d.h. z-Richtung, erstreckt. Die Spulenkerne stehen in Anziehender Kraftwirkung mit der Magnetreihe 1 und bringen somit einen Teil einer Tragkraft für den Türflügel 5 auf.

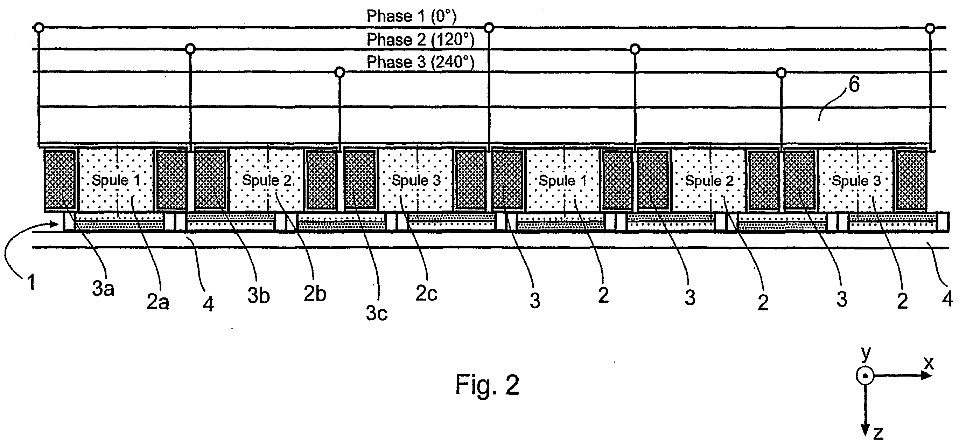

Um einen kontinuierlichen Vorschub der Magnetreihe 1 zu gewährleisten, sind die Stator-Spulen 2 mit ihren jeweiligen Spulenkernen 3 in unterschiedlichen relativen Positionen zum Raster der Dauermagnete angeordnet. Je mehr unterschiedliche Relativpositionen ausgebildet werden, umso gleichmäßiger lässt sich die Schubkraft über den Verfahrweg realisieren. Da andererseits jede Relativposition einer elektrischen Phase eines für den Linearantrieb benötigten Ansteuersystemes zuzuordnen ist, sollten möglichst wenig elektrische Phasen zum Einsatz kommen. Aufgrund des zur Verfügung stehenden dreiphasigen Drehstromnetzes ist ein dreiphasiges System, wie es beispielhaft in Fig. 2 gezeigt ist, sehr kostengünstig aufzubauen.

Hierbei besteht ein jeweiliges Antriebssegment und somit ein Spulenmodul der Linear-Antriebseinheit aus drei Spulen, die eine Ausdehnung von drei Längeneinheiten in Antriebsrichtung, d.h. x-Richtung, aufweisen, wobei also zwischen den Mittelpunkten benachbarter Spulenkerne 3 ein Raster R_{S} = 1 Längeneinheit liegt. Die Länge eines Magneten der Magnetreihe 1 in Antriebsrichtung und die Länge der zwischen den Einzelmagneten der Magnetreihe 1 liegenden Lücke ist hier so gewählt, dass Länge eines Magneten L_{Magnet} + Länge einer Lücke L_{Lücke} = Magnetraster R_{M} = 3/4 Längeneinheit (= 3/4 R_{S}).

Fig. 2 zeigt die Verschaltung der Spulen der in Fig. 1 gezeigten beiden Antriebssegmente der erfindungsgemäß bevorzugt verwendeten Linear-Antriebseinheit. Hier ist eine erste Spule 2a mit einem ersten Spulenkern 3a zwischen eine erste Phase und eine zweite Phase eines aus drei Phasen bestehenden Drehstromsystems angeschlossen, dessen drei Phasen gleichmäßig verteilt sind, also die zweite Phase bei 120° und eine dritte Phase bei 240° liegen, wenn die erste Phase bei 0° liegt. Die in positiver Antriebsrichtung, d.h. +x-Richtung, neben der ersten Spule 2a mit Spulenkern 3a liegende zweite Spule 2b mit Spulenkern 3b eines Antriebssegments der Linear-Antriebseinheit ist zwischen die zweite Phase und die dritte Phase geschaltet und die in positiver Antriebsrichtung, d.h. +x-Richtung neben der zweiten Spule 2b mit Spulenkern 3b liegende dritte Spule 2c mit Spulenkern 3c ist zwischen die dritte Phase und die erste Phase geschaltet. Neben einem solchen Antriebssegment der Linear-Antriebseinheit liegende Antriebssegmente der Linear-Antriebseinheit sind in gleicher Weise an die drei Phasen des Drehstromsystems angeschlossen.

Ordnet man dem durch die Dauermagnete gebildeten Polraster, analog zur Anordnung in einem zweipoligen Gleichstrommotor, Phasenwinkel zu, so lassen sich die linearen Spulenanordnungen in einem kreisförmigen Phasendiagramm abbilden. Da sich dieses sowohl magnetisch als Antriebswirkung auf die Dauermagnete als auch elektrisch als Ansteuerung der Spulen interpretieren lässt, kann durch dieses Diagramm der Zusammenhang zwischen Schaltzuständen und Antriebswirkung einheitlich beschrieben werden.

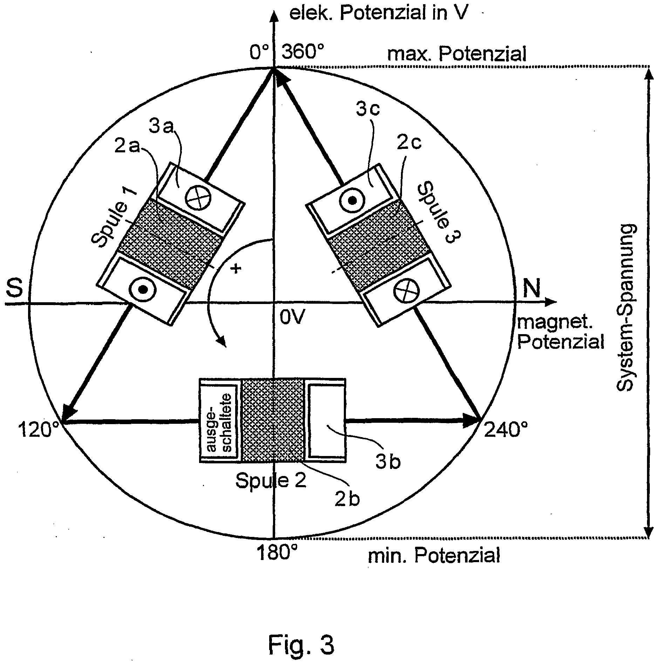

Ein solches kreisförmiges Phasendiagramm mit eingezeichneten Spulen ist in Fig. 3 gezeigt. Hier ist auf der Ordinate das elektrische Potential in V und auf der Abszisse das magnetische Potential angegeben. Ein Kreis um den Ursprung dieses Koordinatensystems, der ein Nullpotential sowohl für das elektrische Potential als auch das magnetische Potential darstellt, repräsentiert die Phasenlagen der an den jeweiligen Spulen anliegenden Spannung, wobei eine 0°-Phasenlage bei dem Schnittpunkt des Kreises mit der positiven Ordinate gegeben ist und sich die Phase im Uhrzeigersinn zu einer 90°-Phasenlage in dem Schnittpunkt des Kreises mit der negativen Abszisse, der das magnetische Potential des Südpols darstellt, eine 180°-Phasenlage in dem Schnittpunkt des Kreises mit der negativen Ordinate, der das minimale Spannungspotential darstellt, einer 270°-Phasenlage in dem Schnittpunkt des Kreises mit der positiven Abszisse, der das magnetische Potential des Nordpols darstellt, bis zu einer 360°-Phasenlage, die gleich der 0°-Phasenlage ist, in dem Schnittpunkt des Kreises mit der positiven Ordinate, der das maximale Spannungspotential darstellt, ändert.

Wie in Fig. 2 gezeigt, ist eine Beziehung gegeben, bei der die erste Spulen 2a mit Spulenkern 3a zwischen einer 0°-Phasenlage und einer 120°-Phasenlage, die zweite Spule 2b mit Spulenkern 3b zwischen einer 120°-Phasenlage und einer 240°-Phasenlage und die dritte Spule 2c mit Spulenkern 3c zwischen einer 240°-Phasenlage und einer 360°-Phasenlage liegen. Bei Drehstrombetrieb drehen sich nun die Zeiger dieser Spulen entsprechend der Wechselfrequenz des Drehstroms im Uhrzeigersinn, wobei jeweils eine der elektrischen Potentialdifferenz zwischen den auf die Ordinate projizierten Anfangs- und Endpunkten des Zeigers entsprechende Spannung an den Spulen anliegt.

Bei der magnetischen Interpretation des Phasendiagramms entspricht ein Phasendurchlauf von 180° einer Verschiebung des Läufers um den Abstand zwischen den Mittelpunkten zweier benachbarter Magnete, also dem Magnetraster R_{M}. Durch die abwechselnde Polarisierung der Magnete im Läufer wird bei einer Verschiebung um das Magnetraster R_{M} ein Polwechsel ausgeführt. Nach einem 360°-Phasendurchlauf beträgt die Läuferverschiebung zwei R_{M}. Hierbei befinden sich die Magnete relativ zum Raster R_{S} der Statorspulen wieder in Ausgangsposition, vergleichbar mit einer 360°-Umdrehung des Rotors eines zweipoligen Gleichstrommotors.

Für die elektrische Interpretation des Phasendiagrammes wird die Ordinate betrachtet, auf der das anliegende elektrische Spannungspotential dargestellt ist. Bei 0° liegt das maximale Potential, bei 180°, das minimale Potential und bei 90° bzw. 270° ein mittleres Spannungspotential an. Wie zuvor erwähnt, werden die Spulen im Diagramm durch Pfeile dargestellt, deren Anfangs- und Endpunkte die Kontaktierungen darstellen. Die jeweils anliegende Spulenspannung kann durch Projektion von Start- und Endpunkt der Pfeile auf die Potentialachse abgelesen werden. Durch die Pfeilrichtung wird die Stromrichtung und hierdurch die Magnetisierungsrichtung der Spule festgelegt.

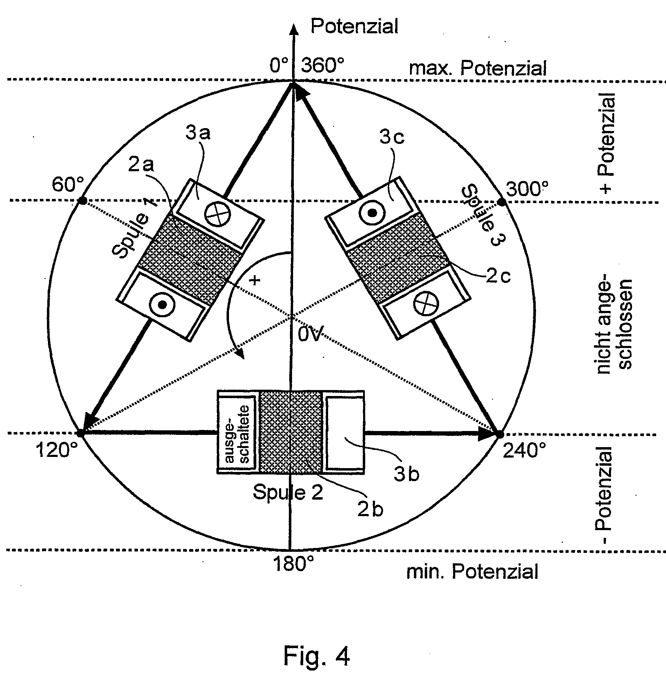

Anstelle einer kontinuierlichen sinusförmigen Spannungsquelle, die ein Phasendiagramm gemäß Fig. 3 aufweist, kann aus Kostengründen auch eine Steuerung mit Rechteck-Charakteristik eingesetzt werden. In einem entsprechenden Phasendiagramm, das in Fig. 4 gezeigt ist, ist die Rechteck-Charakteristik durch Schaltschwellen dargestellt. Hierbei können die Phasenanschlüsse jeweils die drei Zustände Pluspotential, Minuspotential und potentialfrei einnehmen. Dabei liegen das Pluspotential z.B. in einem Bereich zwischen 300° und 60° und das Minuspotential in einem Bereich von 120° bis 240° an und die Bereiche zwischen 60° und 120° sowie 240° und 300° stellen den potentialfreien Zustand dar, in dem die Spulen nicht angeschlossen sind. Bei der Rechteckspannung-Ansteuerung ist der im Vergleich zur Sinus-Steuerung ungleichmäßigere Schub nachteilig.

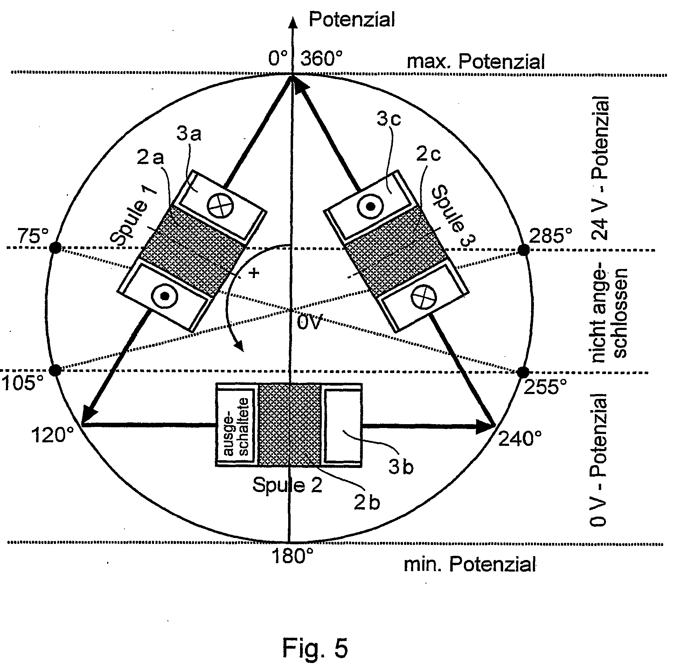

Es lässt sich natürlich noch eine große Zahl weiterer Spulenkonfigurationen und Potentialverteilungen aufbauen, z.B. die in Fig. 5 gezeigte Potentialverteilung, bei der ein minimales Potential von 0 V in einem Bereich zwischen 105° und 255°, ein maximales Potential von 24 V in einem Bereich von 285° bis 75° und potentialfreie Bereiche von 75° bis 105° und von 255° bis 285° vorliegen.

Durch geeignete Ansteuerungen gemäß den oben dargelegten Prinzipien können verschiedene Verfahrgeschwindigkeiten und Verfahrwege erreicht werden. Hierzu können Positionssensoren für die einzelnen Türflügel vorgesehen werden oder es können auch Steuerungen aufgebaut werden, die ohne Positionssensoren auskommen, wobei die Position der Türflügel geschätzt wird.

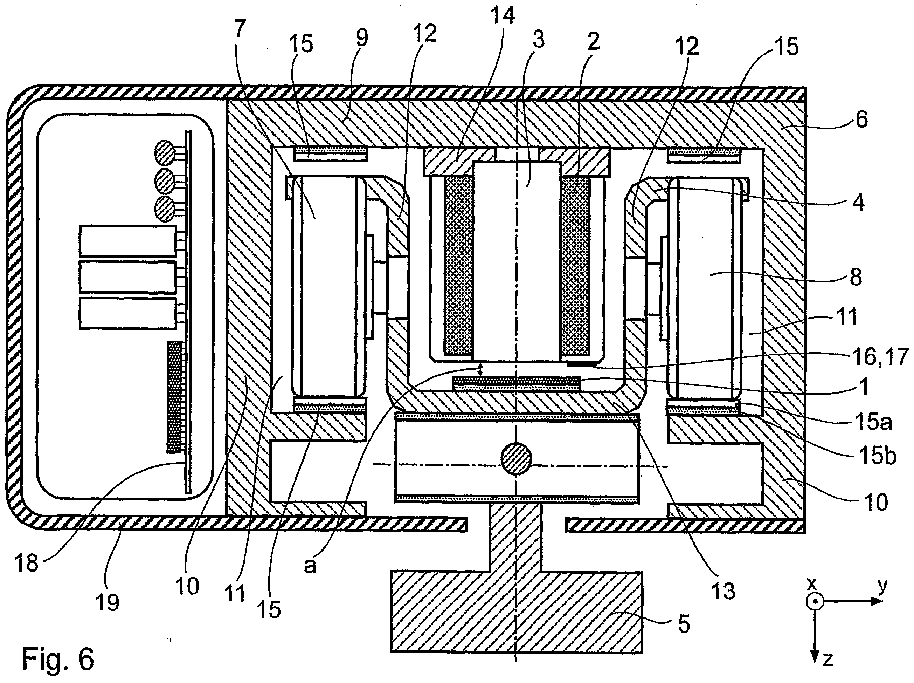

Die Figur 6 zeigt einen Querschnitt einer Trag- und Antriebseinrichtung einer Schiebetür nach einer bevorzugten Ausführungsform nach der Erfindung.

Ein prinzipiell U-förmiges Tragprofil 6 weist einen Boden 9 und zwei senkrecht auf diesem stehende Seitenbereiche 10 auf, die jeweils Aussparungen 11 aufweisen, in denen an dem Tragschlitten 4 befestigte Anordnungen 7, 8 von Einzelrollen laufen, die eine vertikale Führung bewirken. Hier sind zwei identische Anordnungen 7, 8 von Einzelrollen gewählt, von denen eine linke Anordnung 7 in positiver Querrichtung y links von einer rechten Anordnung 8 liegt. Die linke Anordnung 7 ist in positiver Querrichtung y links an dem Tragschlitten 4 befestigt und die rechte Anordnung 8 ist in positiver Querrichtung y rechts an dem Tragschlitten 4 befestigt.

Innerhalb des hier prinzipiell u-förmigen Tragschlittens 4, an dessen Seitenbereichen 12 die Anordnungen 7, 8 von Einzelrollen befestigt sind, ist an dem Boden 13 des Tragschlittens 4 die Magnetreihe 1 angeordnet. Zwischen den Seitenbereichen 12 des Tragschlittens 4 ist mit einem spaltförmigen Abstand a zu der Magnetreihe 1 eine aus Spulen 2 und Spulenkernen 3 bestehende Spulenanordnung angeordnet, die an dem Boden 9 des Tragprofils 6 befestigt ist. Da das Tragprofil 6 aus nichtmagnetischem Werkstoff bestehen kann, z.B. Aluminium, ist zwischen der Spulenanordnung 2, 3 und dem Tragprofil 6 eine weichmagnetische Rückflussschiene 14 angeordnet, die Bohrungen aufweist, durch die die Spulenkerne 3 an dem Boden 9 des Tragprofils 6 befestigt sind. Die Spulenkerne 3 und die weichmagnetische Rückflussschiene 14 können auch integral ausgebildet sein.

Zur Stabilisierung weist der prinzipiell nach oben, d.h. in die negative Tragrichtung, also die -z-Richtung, offene u-förmige Tragschlitten 4 an den Oberkanten seiner Seitenbereiche 12 in Querrichtung, d.h. positive und negative y-Richtung, abstehende Rippen auf, die im Bereich der Einzelrollen der Anordnungen 7, 8 der Rollenanordnung unterbrochen sind.

In dieser Ausführungsformen der Erfindung sind die Aussparungen 11 des Tragprofiles 6 in vertikaler Richtung neben den Spulen 2 und Spulenkernen 3 angeordnet, weswegen der Tragschlitten 4 so ausgestaltet ist, dass nicht nur die an diesem befestigte Magnetreihe 1 innerhalb seiner Seitenbereiche 12 angeordnet ist, sondern auch Teile der an dem Tragprofil 6 befestigten Spulen 2 und Spulenkerne 3. Hierdurch ergibt sich eine besonders flache Bauweise.

Weiter sind die Aussparungen 11 mit Laufflächen 15 versehen, die so ausgestaltet sind, dass ein Abrollen der Einzelrollen der Anordnungen 7, 8 der Rollenanordnung geräuscharm erfolgt. Die Laufflächen 15 können hierzu aus zwei oder mehr Materialkomponenten bestehen, z.B. aus einer weichen Dämpfungsschicht 15b, die an dem Tragprofil 6 vorgesehen ist, und einer harten Laufschicht 15a, auf der die Einzelrollen laufen.

An dem Tragschlitten 4 ist weiter ein (nicht gezeigtes) horizontales Führungselement vorgesehen, das den Tragschlitten 4 in einer stabilen Position in der y-Richtung hält.

Zwischen den Einzelspulen 2 nach unter über diese herausragend sind der Magnetreihe 1 gegenüberliegend Positionssensoren 16, 17 eines Wegmesssystemes angebracht, den die Magnetreihe 1 als Messskala dient, um die Position des in dem Tragprofil 6 laufenden Tragschlittens 4 festzustellen.

Weiter ist um das Tragprofil 6 eine Verkleidung 19 vorgesehen, innerhalb der auch eine Schaltungsanordnung 18 zur Ansteuerung der Linear-Antriebseinheit aufgenommen ist, die eine Steuerung 21 zum Ansteuern der Einzelspulen 2 aufweist und elektrisch mit den Positionssensoren 16, 17 des Wegmesssystemes, mit den Spulen 2 der Spulenanordnung, mit einer (nicht gezeigten) Energieversorgung und mit einer (nicht gezeigten) Sensorik zur Initiierung des Öffnens und Schließens der erfindungsgemäßen Schiebetür verbunden ist.

Erfindungsgemäß können natürlich auch die Magnetreihe 1 an dem Gehäuse 6 und die aus Spulen 2, Spulenkernen 3 und ggf. einer weichmagnetischen Rückflussschiene 14 bestehende Spuleneinheit an dem Tragschlitten 4 befestigt sein.

Die Steuerung 21 kann durch Auswahl der angesteuerten Einzelspulen 2 einen oder mehre Türflügel 5, d.h. mit jeweils einer Magnetreihe 1 versehene Tragschlitten 4 bewegen.

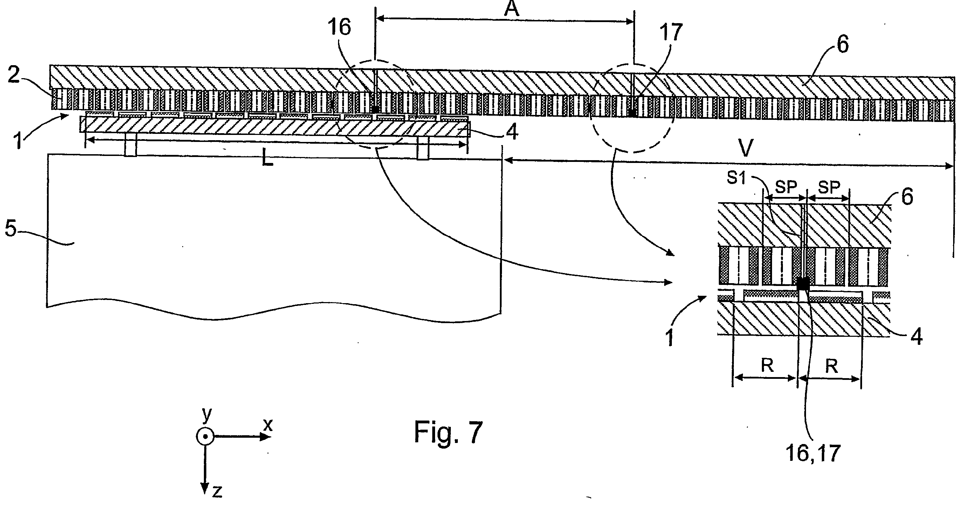

Die Figur 7 zeigt eine erste bevorzugte Ausführungsform der Anordnung von Positionssensoren nach der Erfindung.

In dieser Ausführungsform sind zwischen den Einzelspulen 2 an dem Tragprofil 6 zwei magnetisch sensitive Positionssensoren 16, 17 eingesetzt, zwischen denen ein Abstand A größer ist, als die Differenz zwischen der Länge L der Magnetreihe 1 am Tragschlitten 4, d.h. am Läufer, und dem Verfahrweg V der Tür und kleiner ist, als die Länge L der Magnetreihe 1 des Läufers.

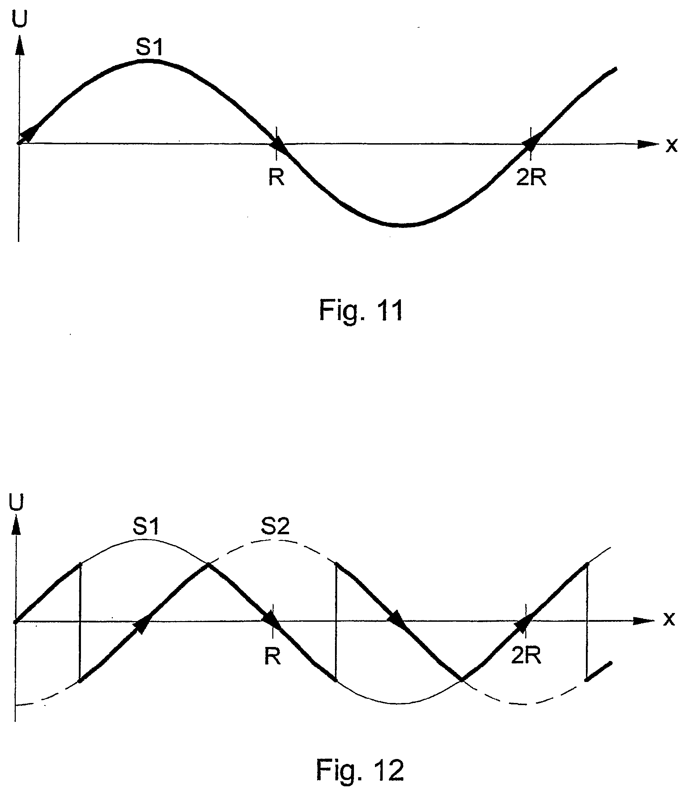

In einer Ausschnittsvergrößerung ist weiter gezeigt, dass die Einzelmagnete der Magnetreihe 1 einen Polabstand von R und die Einzelspulen 2 der Spulenanordnung einen Abstand SP zueinander aufweisen. Die Positionssensoren 16, 17 geben jeweils ein Messsignal S1 aus, das in der Figur 11 gezeigt ist.

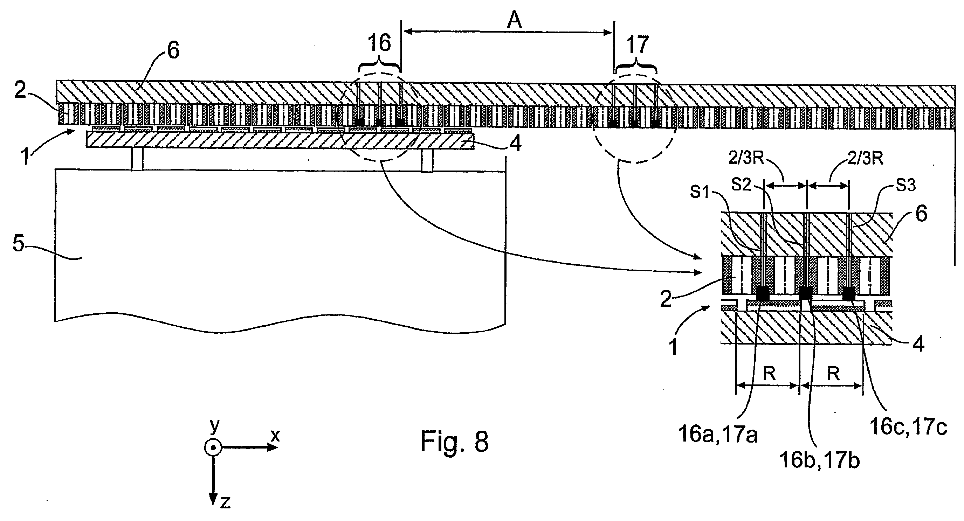

Die Figur 8 zeigt eine zweite bevorzugte Ausführungsform der Anordnung von Positionssensoren nach der Erfindung.

Im Unterschied zu der in der Figur 7 gezeigten ersten bevorzugten Ausführungsform besteht hier jeder Positionssensor 16, 17 nicht aus einem einzelnen Sensor, sondern aus je drei Einzelsensoren 16a, 16b, 16c, 17a, 17b, 17c, die in Fahrtrichtung x zueinander beabstandet angeordnet sind. In dieser Ausführungsform ist der Abstand A zwischen den zueinander benachbarten Einzelsensoren der Positionssensoren definiert, also durch den rechten Einzelsensor 16c des linken Positionssensors 16 und den linken Einzelsensor 17a des rechten Positionssensors 17. Dieser Abstand A ist erfindungsgemäß wiederum größer, als die Differenz zwischen der Länge L der Magnetreihe 1 am Tragschlitten 4, d.h. am Läufer, und dem Verfahrweg V der Tür und kleiner, als die Länge L der Magnetreihe 1 des Läufers.

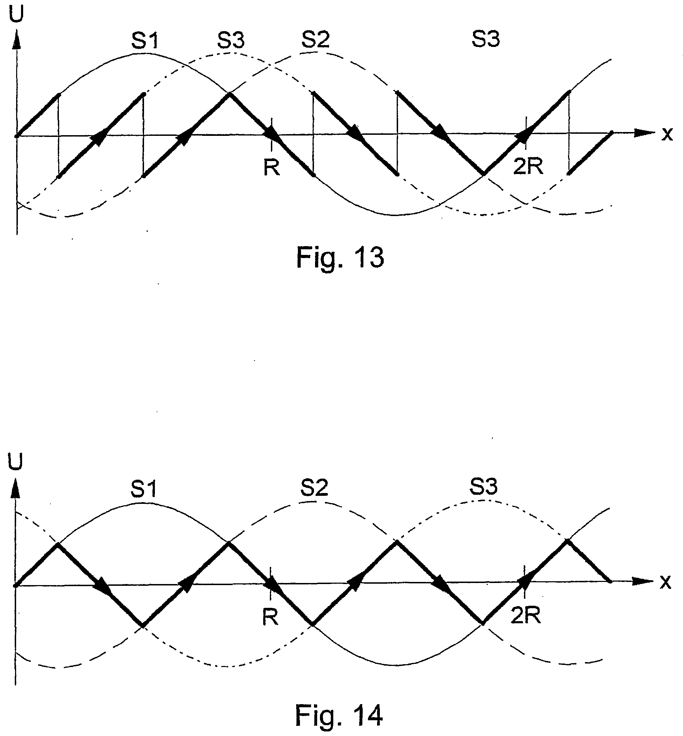

In einer Ausschnittsvergrößerung ist weiter gezeigt, dass die Einzelmagnete der Magnetreihe 1 einen Polabstand von R und die Einzelspulen 2 der Spulenanordnung sowie die zueinander benachbarten Einzelsensoren 16a, 16b, 16c, 17a, 17b, 17c eines Positionssensors 16, 17 einen Abstand 2/3 R zueinander aufweisen. Die linken Positionssensoren 16a, 17a geben jeweils ein Messsignal S1 aus, die mittleren Positionssensoren 16b, 17b geben jeweils ein Messsignal S2 aus und die rechten Positionssensoren 16c, 17c geben jeweils ein Messsignal S3 aus, die zusammen mit dem resultierenden fett eingezeichneten Messsignal, bei dem immer die steilsten Signalabschnitte der von den Einzelsensoren 16a, 16b, 16c, 17a, 17b, 17c eines Positionssensors 16, 17 ausgegebenen Messsignale verwendet werden, in der Figur 13 gezeigt sind.

Die Figur 12 zeigt die entsprechenden Signalverläufe und das resultierende fett eirigezeichnete Messsignal bei zwei für jeden Positionssensor verwendeten Einzelsensoren.

In den beiden zuvor beschriebenen bevorzugten Ausführungsformen weisen mindestens zwei magnetisch sensitiven Positionssensoren aus einem oder mehreren Einzelsensoren einen Abstand A, der mindestens um den Magnetpolabstand R größer ist, als die Differenz von Magnetreihenlänge L und Verfahrweg V und auch um mindestens einen Magnetpolabstand R kleiner ist, als die Länge L der Magnetreihe 1 des Läufers, um eine sichere Überdeckung der mindestens zwei Messbereiche zu erreichen. Weiter haben die mindestens zwei magnetisch sensitiven Positionssensoren aus einem oder mehreren Einzelsensoren einen Abstand A, der ein Mehrfaches des Spulenabstandes SP und gleichzeitig ein Mehrfaches des Magnetabstandes R beträgt.

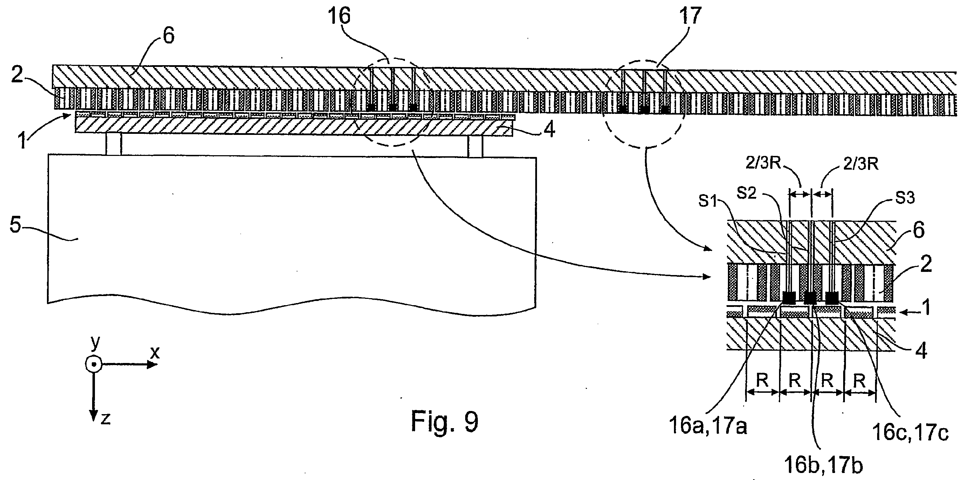

Die Figur 9 zeigt eine dritte bevorzugte Ausführungsform der Anordnung von Positionssensoren nach der Erfindung.

Im Unterschied zu der zweiten bevorzugten Ausführungsform nach der Erfindung ist hier der Magnetpolabstand R kleiner gewählt, insbesondere halb so groß, wie in der zweiten bevorzugten Ausführungsform nach der Erfindung. Hierdurch ergibt sich, wie es in einer Ausschnittsvergrößerung gezeigt ist, dass die Einzelmagnete der Magnetreihe 1 einen Polabstand von R und die Einzelspulen 2 der Spulenanordnung einen Abstand von 4/3 R zueinander aufweisen. Die zueinander benachbarten Einzelsensoren 16a, 16b, 16c, 17a, 17b, 17c eines Positionssensors 16, 17 weisen weiterhin einen Abstand 2/3 R zueinander auf. Hierdurch ergeben sich die in der Figur 14 gezeigten Messsignale der Einzelsensoren 16a, 16b, 16c, 17a, 17b, 17c eines Positionssensors 16, 17 und das abschnittsweise nahezu linear verlaufende fett eingezeichnete Messsignal, bei dem immer die steilsten Signalabschnitte der von den Einzelsensoren 16a, 16b, 16c, 17a, 17b, 17c eines Positionssensors 16, 17 ausgegebenen Messsignale verwendet werden, das synchron zur Weiterschaltfrequenz eines dreiphasigen Linearmotors verläuft.

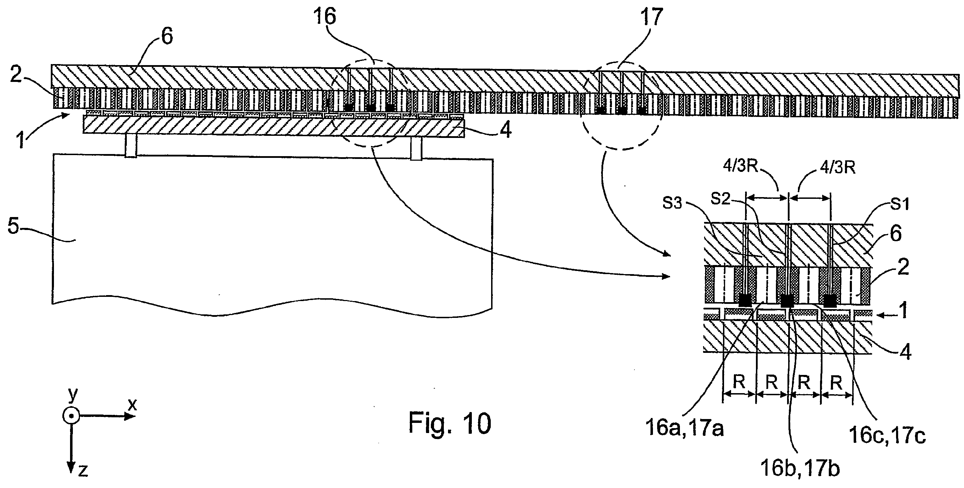

Die Figur 10 zeigt eine vierte bevorzugte Ausführungsform der Anordnung von Positionssensoren nach der Erfindung.

Im Unterschied zu der dritten bevorzugten Ausführungsform nach der Erfindung ist hier der Abstand der zueinander benachbarten Einzelsensoren 16a, 16b, 16c, 17a, 17b, 17c eines Positionssensors 16, 17 zu 4/3 R gewählt, wie der Abstand der zueinander benachbarten Einzelspulen 2 der Spulenanordnung, wodurch die Einzelsensoren zwischen den Einzelspulen 2 angeordnet sein können.

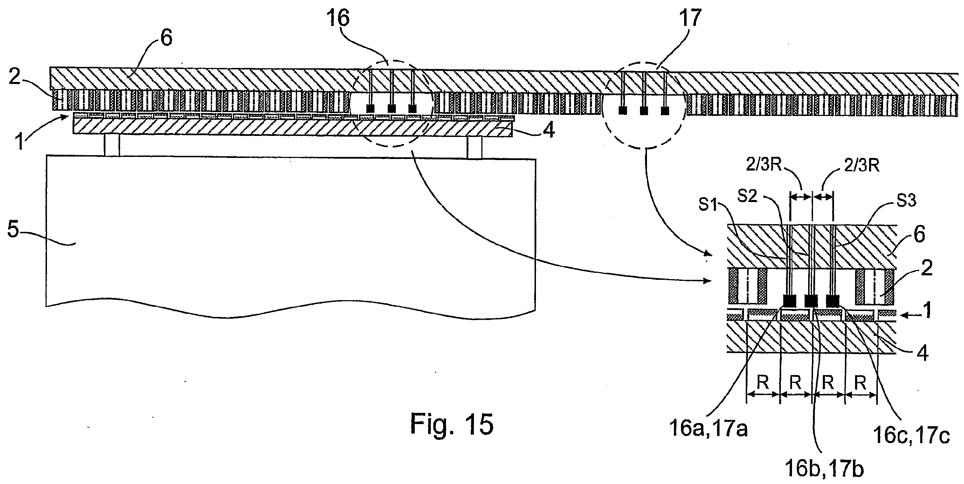

Die Figur 15 zeigt eine fünfte bevorzugte Ausführungsform der Anordnung von Positionssensoren nach der Erfindung.

Im Unterschied zu der dritten bevorzugten Ausführungsform nach der Erfindung ist hier die Spulenanordnung im Bereich der Positionssensoren 16, 17 unterbrochen, wobei eine Lücke realisiert ist, die drei Einzelspulen entspricht; d.h., dass für jeden der drei Einzelsensoren 16a, 16b, 16c, 17a, 17b, 17c umfassenden Positionssensoren 16, 17 eine Lücke von 4R realisiert ist. Die Positionssensoren 16, 17 sind jeweils in der Mitte dieser Lücke angeordnet, wodurch ein Abstand von 4/3 R von den äußeren Einzelsensoren 16a, 16c, 17a, 17c zu den benachbarten Einzelspulen 2 gegeben ist.

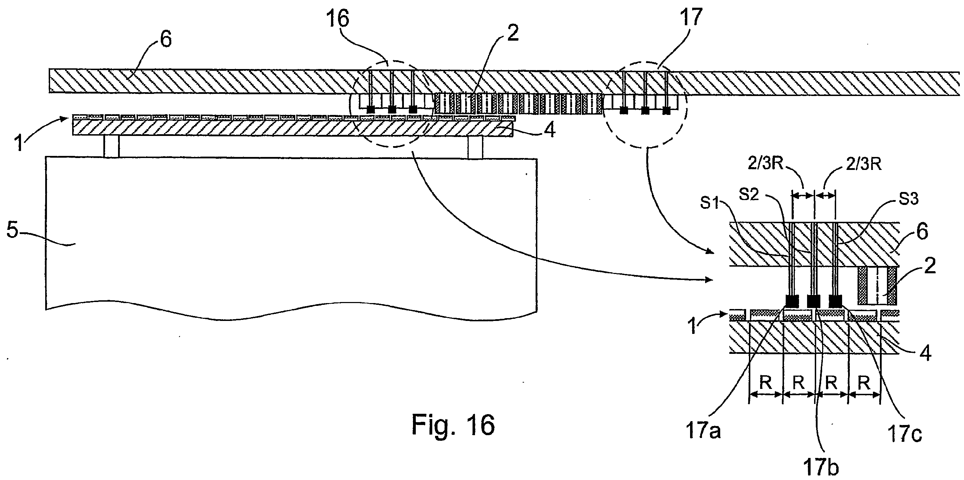

Die Figur 16 zeigt eine sechste bevorzugte Ausführungsform der Anordnung von Positionssensoren nach der Erfindung.

Im Unterschied zu der fünften bevorzugten Ausführungsform nach der Erfindung ist hier die Spulenanordnung im Bereich der Positionssensoren 16, 17 nicht lediglich unterbrochen, sondern lediglich in der fünften Ausführungsform entsprechender Position zwischen den Positionssensoren 16, 17 ausgeführt.

Die Ausschnittsvergrößerung zeigt hier lediglich den linken Positionssensor 17, bei dem der Abstand zu der rechts von ihm liegenden Einzelspule 2 4/3 R beträgt. Der rechte Einzelsensor 16 ist entsprechend aufgebaut, wobei hier der Abstand zu der links von ihm liegenden Einzelspule 2 4/3 R beträgt.

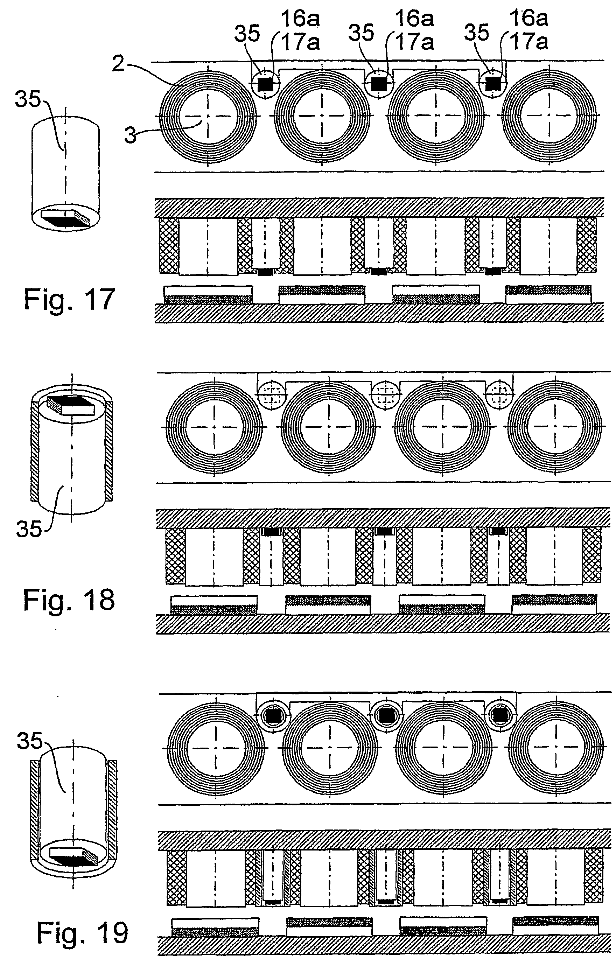

Die Figur 17 zeigt die Verwendung von magnetfeldleitenden Rückschlusskörpern nach einer ersten Ausgestaltung der Erfindung.

Die hier gezeigten magnetisch leitenden Rückschlusskörper 35 bestehen jeweils aus einem parallel zu den Spulenkernen 3 angeordneten Vollzylinder eines weichmagnetischen Werkstoffes, wie z.B. Eisen oder Stahl, auf dessen der Magnetreihe 1 gegenüberliegender Stirnfläche jeweils ein Einzelsensor 16a, 16b, 16c, 17a, 17b, 17c eines Positionssensors 16, 17 angeordnet ist. Durch die magnetisch leitenden Rückschlusskörper 35 wird der Feldschluss der Einzelmagnete der Magnetreihe 1 über die magnetisch sensitiven Einzelsensoren 16a, 16b, 16c, 17a, 17b, 17c verbessert und hierdurch wird eine feldverstärkende Wirkung im Bereich des Sensors erhalten.

Die Figur 18 zeigt die Verwendung von magnetfeldleitenden Rückschlusskörpern nach einer zweiten Ausgestaltung der Erfindung.

Im Unterschied zu der in Figur 17 gezeigten Verwendung von magnetfeldleitenden Rückschlusskörpern nach einer ersten Ausgestaltung der Erfindung ist hier ein jeweiliger Einzelsensor 16a, 16b, 16c, 17a, 17b, 17c eines Positionssensors 16, 17 auf der der Magnetreihe 1 abgewandten Stirnfläche des Vollzylinders angeordnet.

Die Figur 19 zeigt die Verwendung von Abschirmungselementen nach der Erfindung.

Die hier gezeigten Abschirmungselemente 36 bestehen aus einem um den magnetisch leitenden Rückschlusskörper 35 angeordnetes und diesen zumindest um die Höhe eines Einzelsensors 16a, 16b, 16c, 17a, 17b, 17c eines Positionssensors 16, 17 überragendes Abschirmblech eines magnetfeldleitendem Werkstoffes, wie z.B. Eisen oder Stahl. Gezeigt ist die Anordnung der Abschirmungselemente 36 mit den Rückschlusskörpern 35 der ersten Ausgestaltung nach der Erfindung. Natürlich ist auch eine Anordnung der Abschirmungselemente 36 mit den Rückschlusskörpern 35 der zweiten Ausgestaltung nach der Erfindung möglich.

### Bezugszeichenliste

- 1: Magnetreihe
- 2 a, b, c: Spule
- 3 a, b, c: Spulenkern
- 4: Tragschlitten
- 5: Türflügel
- 6: Tragprofil
- 7: Rollenanordnung, linke Anordnung
- 8: Rollenanordnung, rechte Anordnung
- 9: Boden des Tragprofils
- 10: Seitenbereich des Tragprofils
- 11: Aussparungen in den Seitenbereichen des Tragprofils
- 12: Seitenbereich des Tragschlittens
- 13: Boden des Tragschlittens
- 14: Rückflussschiene
- 15: Laufflächen
- 16 a, b, c,: erster Messwertaufnehmer des Wegmesssystems
- 17 a, b, c: zweiter Messwertaufnehmer des Wegmesssystems
- 18: Schaltungsanordnung
- 19: Verkleidung
- 35: Rückschlusskörper
- 36: Abschirmungselement
- R: Polabstand
- X: Fahrtrichtung
- S1: Signal
- S2: Signal
- S3: Signal
- D: Amplitudendifferenz
- S: Abstand
- A: Abstand
- L: Länge
- V: Verfahrweg
- SP: Abstand

## Patentansprüche

1. Schiebetür mit einem magnetischen Antriebssystem für mindestens einen Türflügel (5), mit einer in Antriebsrichtung angeordneten Magnetreihe (1), deren Magnetisierung in ihrer Längsrichtung in bestimmten Abständen das Vorzeichen wechselt, und einem mit der Magnetreihe (1) verbundenen Tragschlitten (4), an dem der Türflügel (5) befestigt werden kann, sowie mit einer aus mehreren Einzelspulen (2) und Spulenkernen (3) bestehenden Spulenanordnung, die bei entsprechender Ansteuerung der Einzelspulen (2) eine Wechselwirkung mit der Magnetreihe (1) bewirkt, die Vorschubkräfte hervorruft, und einem mit der Magnetreihe (1) als Magnetmaßstab arbeitenden Wegmesssystem mit einem ersten magnetisch sensitiven Positionssensor (16), **dadurch gekennzeichnet, dass** das Wegmesssystem einen zweiten magnetisch sensitiven Positionssensor (17) aufweist, dessen Abstand (A) zu dem ersten Positionssensor (16) größer ist als eine Differenz zwischen einer Länge (L) der Magnetreihe (1) und einem Verfahrweg (V) der Schiebetür, und der kleiner ist als die Länge (L) der Magnetreihe (1), wobei die Positionssensoren (16, 17) so angeordnet sind, dass der Verfahrweg (L) der Schiebetür in zwei Messbereiche der Positionssensoren (16, 17) unterteilt ist.

2. Schiebetür nach Anspruch 1, **dadurch gekennzeichnet, dass** der Abstand (A) zwischen dem ersten Positionssensor (16) und dem zweiten Positionssensor (17) mindestens um einen Magnetpolabstand (R) zwischen zwei Einzelmagneten der Magnetreihe (1) größer ist als die Differenz zwischen der Länge (L) der Magnetreihe (1) und dem Verfahrweg (V) der Schiebetür und mindestens um einen Magnetpolabstand (R) zwischen zwei Einzelmagneten der Magnetreihe (1) kleiner ist als die Länge (L) der Magnetreihe (1).

3. Schiebetür nach Anspruch 1 oder 2, **dadurch gekennzeichnet, dass** der Abstand (A) zwischen dem ersten Positionssensor (16) und dem zweiten Positionssensor (17) ein Mehrfaches eines Magnetpolabstandes (R) zwischen zwei Einzelmagneten der Magnetreihe (1) und gleichzeitig ein Mehrfaches eines Spulenabstands (SP) zwischen zwei Einzelspulen (2) beträgt.

4. Schiebetür nach einem der vorstehenden Ansprüche, **dadurch gekennzeichnet, dass** die magnetisch sensitiven Positionssensoren (16, 17) Hall-Sensoren und/oder magnetoresistive Sensoren sind.

5. Schiebetür nach einem der vorstehenden Ansprüche, **dadurch gekennzeichnet, dass** die magnetisch sensitiven Positionssensoren (16, 17) jeweils aus mehreren magnetisch sensitiven Einzelsensoren (16a, 16b, 16c, 17a, 17b, 17c) bestehen.

6. Schiebetür nach Anspruch 5, **dadurch gekennzeichnet, dass** die magnetisch sensitiven Einzelsensoren (16a, 16b, 16c, 17a, 17b, 17c) eines magnetisch sensitiven Positionssensors (16, 17) untereinander einen solchen festen Abstand (S) aufweisen, dass immer mindestens einer der Einzelsensoren (16a, 16b, 16c, 17a, 17b, 17c) einen steilen Funktionsverlauf zeigt.

7. Schiebetür nach Anspruch 5 oder 6, **dadurch gekennzeichnet, dass** die Anzahl der magnetisch sensitiven Einzelsensoren (16a, 16b, 16c, 17a, 17b, 17c) jedes magnetisch sensitiven Positionssensors (16, 17) mindestens einer Anzahl von elektrischen Phasen des Antriebssystems entspricht.

8. Schiebetür nach einem der vorstehenden Ansprüche 5 bis 7, **dadurch gekennzeichnet, dass** die magnetisch sensitiven Einzelsensoren (16a, 16b, 16c, 17a, 17b, 17c) eines magnetisch sensitiven Positionssensors (16, 17) untereinander einen festen Abstand (S) aufweisen, der gleich einem Quotienten aus Magnetpolabstand (R) zwischen zwei Einzelmagneten der Magnetreihe (1) und einer Anzahl der in dem Positionssensor (16, 17) genutzten Einzelsensoren (16a, 16b, 16c, 17a, 17b, 17c) oder einem Mehrfachen davon ist.

9. Schiebetür nach einem der vorstehenden Ansprüche, **dadurch gekennzeichnet, dass** die magnetisch sensitiven Positionssensoren (16, 17) unabhängig von der Feldstärke nur die Feldrichtung messen.

10. Schiebetür nach einem der vorstehenden Ansprüche, **gekennzeichnet durch** magnetisch leitende Rückschlusskörper (35), die einen Feldschluss der Einzelmagnete der Magnetreihe (1) über die magnetisch sensitiven Positionssensoren (16, 17) verbessern.

11. Schiebetür nach Anspruch 10, **dadurch gekennzeichnet, dass** die magnetisch leitenden Rückschlusskörper (35) aus einem weichmagnetischen Werkstoff bestehen.

12. Schiebetür nach einem der vorstehenden Ansprüche, **gekennzeichnet durch** Abschirmungselemente (36), die die magnetisch sensitiven Positionssensoren (16, 17) derart umhüllen, dass eine Störwirkung von Streufeldern der Einzelspulen (2) auf die magnetisch sensitiven Positionssensoren (16, 17) reduziert wird.

13. Schiebetür nach Anspruch 12, **dadurch gekennzeichnet, dass** die Abschirmungselemente (36) aus einem magnetfeldleitenden Werkstoff bestehen.

14. Schiebetür nach einem der vorstehenden Ansprüche, **dadurch gekennzeichnet, dass** die Spulenanordnung von Einzelspulen (2) im Nahbereich der magnetisch sensitiven Positionssensoren (16, 17) unterbrochen ist.

15. Schiebetür nach einem der vorstehenden Ansprüche, **dadurch gekennzeichnet, dass** die Spulenanordnung von Einzelspulen (2) mit einem Abstand zu den magnetisch sensitiven Positionssensoren (16, 17) zwischen den magnetisch sensitiven Positionssensoren (16, 17) angeordnet ist.

16. Schiebetür nach einem der vorstehenden Ansprüche, **gekennzeichnet durch** eine mit der Magnetreihe (1) verbundene Rollenanordnung (7, 8), die bezüglich des Türflügels (5) eine Tragfunktion erfüllt und einen bestimmten spaltförmigen Abstand (a) zwischen der Magnetreihe (1) und den Spulenkernen (3) gewährleistet.

17. Schiebetür nach einem der vorstehenden Ansprüche, **dadurch gekennzeichnet, dass** die Magnetreihe (1) parallel zu einer Tragrichtung (z) und quer zu einer Antriebsrichtung (x) magnetisiert ist.

18. Schiebetür nach einem der vorstehenden Ansprüche, **dadurch gekennzeichnet, dass** die Magnetreihe (1) aus einem oder mehreren Hochleistungsmagneten besteht.

19. Schiebetür nach Anspruch 18, **dadurch gekennzeichnet, dass** der eine oder die mehreren Hochleistungsmagneten Seltenenerden-Hochleistungsmagneten ist bzw. sind.

20. Schiebetür nach Anspruch 19, **dadurch gekennzeichnet, dass** der eine oder die mehreren Seltenenerden-Hochleistungsmagneten vom Typ NeFeB oder Sm₂Co ist bzw. sind.

21. Schiebetür nach einem der vorstehenden Ansprüche, **dadurch gekennzeichnet, dass** die Schiebetür als Bogenschiebetür oder Horizontal-Schiebewand ausgebildet ist.

## Claims

1. A sliding door with a magnetic drive system for at least one door leaf (5), with a row of magnets (1) disposed in driving direction, the magnetization thereof changing the sign in the longitudinal direction thereof at certain intervals, and with a carrying slide (4) connected to the row of magnets (1), at which slide the door leaf (5) can be attached, as well as with a coil arrangement consisting of several individual coils (2) and coil cores (3), which arrangement, upon appropriate activation of the individual coils (2), causes an interaction with the row of magnets (1) generating advance forces, and with a displacement measuring system, cooperating with the row of magnets (1) as a magnetic measuring scale, having a first magnetically sensitive position sensor (16), **characterized in that** the displacement measuring system has a second magnetically sensitive position sensor (17), the distance (A) thereof to the first position sensor (16) being larger than a difference between a length (L) of the row of magnets (1) and a travel path (V) of the sliding door, and being smaller than the length (L) of the row of magnets (1), the position sensors (16, 17) being disposed such that the travel path (V) of the sliding door is subdivided into two measuring ranges of the position sensors (16, 17).

2. The sliding door according to claim 1, **characterized in that** the distance (A) between the first position sensor (16) and the second position sensor (17) is larger by at least one magnetic pole distance (R) between two individual magnets of the row of magnets (1) than the difference between the length (L) of the row of magnets (1) and the travel path (V) of the sliding door and smaller by at least one magnetic pole distance (R) between two individual magnets of the row of magnets (1) than the length (L) of the row of magnets (1).

3. The sliding door according to claim 1 or 2, **characterized in that** the distance (A) between the first position sensor (16) and the second position sensor (17) is a multiple of a magnetic pole distance (R) between two individual magnets of the row of magnets (1) and simultaneously a multiple of a coil distance (SP) between two individual coils (2).

4. The sliding door according to any of the preceding claims, **characterized in that** the magnetically sensitive position sensors (16, 17) are Hall sensors and/or magneto-resistive sensors.

5. The sliding door according to any of the preceding claims, **characterized in that** the magnetically sensitive position sensors (16, 17) respectively consist of several magnetically sensitive individual sensors (16a, 16b, 16c, 17a, 17b, 17c).

6. The sliding door according to claim 5, **characterized in that** the magnetically sensitive individual sensors (16a, 16b, 16c, 17a, 17b, 17c) of a magnetically sensitive position sensor (16, 17) have such a fixed distance (S) with regard to each other that always at least one of the individual sensors (16a, 16b, 16c, 17a, 17b, 17c) has a steep functional course.

7. The sliding door according to claim 5 or 6, **characterized in that** the number of magnetically sensitive individual sensors (16a, 16b, 16c, 17a, 17b, 17c) of each magnetically sensitive position sensor (16, 17) corresponds at least to a number of electrical phases of the drive system.

8. The sliding door according to any of the preceding claims 5 to 7, **characterized in that** the magnetically sensitive individual sensors (16a, 16b, 16c, 17a, 17b, 17c) of a magnetically sensitive position sensor (16, 17) have a fixed distance (S) with regard to each other, which is equal to a quotient of the magnetic pole distance (R) between two individual magnets of the row of magnets (1) and a number of the individual sensors (16a, 16b, 16c, 17a, 17b, 17c) used in the position sensor (16, 17), or a multiple thereof.

9. The sliding door according to any of the preceding claims, **characterized in that** the magnetically sensitive position sensors (16, 17) measure only the field direction independently of the field strength.

10. The sliding door according to any of the preceding claims, **characterized by** magnetically conducting keepers (35), which enhance a field closure of the individual magnets of the row of magnets (1) via the magnetically sensitive position sensors (16, 17).

11. The sliding door according to claim 10, **characterized in that** the magnetically conducting keepers (35) are made of soft-magnetic material.

12. The sliding door according to any of the preceding claims, **characterized by** shielding elements (36), which surround the magnetically sensitive position sensors (16, 17) in such a way that an interference, originating from leakage fields of the individual coils (2) with the magnetically sensitive position sensors (16, 17) is reduced.

13. The sliding door according to claim 12, **characterized in that** the shielding elements (36) are made of a magnetic field conducting material.

14. The sliding door according to any of the preceding claims, **characterized in that** the coil arrangement of individual coils (2) is interrupted at close range of the magnetically sensitive position sensors (16, 17).

15. The sliding door according to any of the preceding claims, **characterized in that** the coil arrangement of individual coils (2) is disposed at a distance to the magnetically sensitive position sensors (16, 17) between the magnetically sensitive position sensors (16, 17).

16. The sliding door according to any of the preceding claims, **characterized by** a roller assembly (7, 8) connected to the row of magnets (1), which assembly fulfils a carrying function for the door leaf (5) and guarantees a certain gap-shaped distance (a) between the row of magnets (1) and the coil cores (3).

17. The sliding door according to any of the preceding claims, **characterized in that** the row of magnets (1) is magnetized parallel to a carrying direction (z) and perpendicularly to a driving direction (x).

18. The sliding door according to any of the preceding claims, **characterized in that** the row of magnets (1) consists of one or more high-energy magnets.

19. The sliding door according to claim 18, **characterized in that** the one or more high-energy magnets are respectively rare-earth high-energy magnets.

20. The sliding door according to claim 19, **characterized in that** the one or more rare-earth high-energy magnet/s is/are respectively of the type NeFeB or Sm₂Co.

21. The sliding door according to any of the preceding claims, **characterized in that** the sliding door is configured as an arched sliding door or as a horizontal sliding wall.

## Revendications

1. Porte coulissante avec un système d'entraînement magnétique pour au moins un vantail de porte (5), avec une rangée d'éléments magnétiques (1), agencée en direction d'entraînement, dont la magnétisation change de signe en leur direction longitudinale à certaines intervalles, et avec un chariot porteur (4) connecté à la rangée d'éléments magnétiques (1), sur lequel le vantail de porte (5) peut être attaché, de même qu'avec un agencement de bobines composé de plusieurs bobines individuelles (2) et de noyaux de bobines (3), lesquels, lors d'une activation appropriée des bobines individuelles (2) causent une interaction avec la rangée d'éléments magnétiques (1) provoquant des forces de propulsion, et avec un système de mesure de déplacement avec un premier capteur de position (16) magnétiquement sensible sous forme de règle magnétique, système coopérant avec la rangée d'éléments magnétiques (1), **caractérisée en ce que** le système de mesure de déplacement comporte un deuxième capteur de position (17) magnétiquement sensible, dont la distance (A) par rapport au premier capteur de position (16) est plus grande qu'une différence entre la longueur (L) de la rangée d'éléments magnétiques (1) et un trajet de déplacement (V) de la porte coulissante, et est inférieure que la longueur (L) de la rangée d'éléments magnétiques (1), les capteurs de position (16, 17) étant agencés de telle façon que le trajet de déplacement (V) de la porte coulissante est subdivisé en deux domaines de mesure des capteurs de position (16, 17).

2. Porte coulissante selon la revendication 1, **caractérisée en ce que** la distance (A) entre le premier capteur de position (16) et le deuxième capteur de position (17) est plus grande d'au moins une distance de pôle magnétique (R) entre deux éléments magnétiques individuels de la rangée d'éléments magnétiques (1) que la différence entre la longueur (L) de la rangée d'éléments magnétiques (1) et le trajet de déplacement (V) de la porte coulissante et plus petite d'au moins une distance de pôle magnétique (R) entre deux éléments magnétiques individuels de la rangée d'éléments magnétiques (1) que la longueur (L) de la rangée d'éléments magnétiques (1).

3. Porte coulissante selon la revendication 1 ou 2, **caractérisée en ce que** la distance (A) entre le premier capteur de position (16) et le deuxième capteur de position (17) est un multiple d'une distance de pôle magnétique (R) entre deux éléments magnétiques individuels de la rangée d'éléments magnétiques (1) et en même temps un multiple d'une distance de bobine (SP) entre deux bobines individuelles (2).

4. Porte coulissante selon l'une des revendications précédentes, **caractérisée en ce que** les capteurs de position (16, 17) magnétiquement sensibles consistent en capteurs à effet Hall et/ou en capteurs magnétorésistifs.

5. Porte coulissante selon l'une des revendications précédentes, **caractérisée en ce que** les capteurs de position (16, 17) magnétiquement sensibles consistent respectivement en plusieurs capteurs individuels magnétiquement sensibles (16a, 16b, 16c, 17a, 17b, 17c).

6. Porte coulissante selon la revendication 5, **caractérisée en ce que** les capteurs individuels (16a, 16b, 16c, 17a, 17b, 17c) magnétiquement sensibles d'un capteur de position (16, 17) magnétiquement sensible présentent une telle distance (S) fixe parmi eux que toujours au moins un des capteurs individuels (16a, 16b, 16c, 17a, 17b, 17c) montre une course de fonctionnement raide.

7. Porte coulissante selon la revendication 5 ou 6, **caractérisée en ce que** le nombre des capteurs individuels (16a, 16b, 16c, 17a, 17b, 17c) magnétiquement sensibles de chaque capteur de position (16, 17) magnétiquement sensible correspond au moins au nombre des phases électriques du système d'entraînement.

8. Porte coulissante selon l'une des revendications précédentes 5 à 7, **caractérisée en ce que** les capteurs individuels (16a, 16b, 16c, 17a, 17b, 17c) magnétiquement sensibles d'un capteur de position (16, 17) magnétiquement sensible présente une distance (S) fixe les uns par rapport aux autres, qui est égale à un quotient de la distance de pôle magnétique (R) entre deux éléments magnétiques individuels de la rangée d'éléments magnétiques (1) et un nombre de capteurs individuels (16a, 16b, 16c, 17a, 17b, 17c) en service dans le capteur de position (16, 17) ou à leur multiple.

9. Porte coulissante selon l'une des revendications précédentes, **caractérisée en ce que** les capteurs de position (16, 17) magnétiquement sensibles indépendant de l'intensité du champ, seulement mesurent la direction du champ.

10. Porte coulissante selon l'une des revendications précédentes, **caractérisée par** des corps de culasse (35) magnétiques conducteurs, lesquels, par l'intermédiaire des capteurs de position (16, 17) magnétiquement sensibles, améliorent une fermeture de champ des éléments magnétiques individuels de la rangée d'éléments magnétiques (1).

11. Porte coulissante selon la revendication 10, **caractérisée en ce que** les corps de coulasse (35) magnétiques conducteurs consistent en une matière magnétique douce.

12. Porte coulissante selon l'une des revendications précédentes, **caractérisée par** des éléments de blindage (36), lesquels entourent les capteurs de position (16, 17) magnétiquement sensibles de telle façon que des effets perturbateurs de champs de dispersion des bobines individuelles (2) sur les capteurs de position (16, 17) magnétiquement sensibles sont réduits.

13. Porte coulissante selon la revendication 12, **caractérisée par** des éléments de blindage (36) consistent en matière conductrice des champs magnétiques.

14. Porte coulissante selon l'une des revendications précédentes, **caractérisée en ce que** l'agencement de bobines avec des bobines individuelles (2) est interrompu dans le voisinage immédiat des capteurs de position (16, 17) magnétiquement sensibles.

15. Porte coulissante selon l'une des revendications précédentes, **caractérisée en ce que** l'agencement de bobines avec des bobines individuelles (2) est agencé à une distance par rapport aux capteurs de position (16, 17) magnétiquement sensibles entre les capteurs de position (16, 17) magnétiquement sensibles.

16. Porte coulissante selon l'une des revendications précédentes, **caractérisée par** un agencement de galets (7, 8) connecté à la rangée d'éléments magnétiques (1), qui assume une fonction portante par rapport au vantail de porte (5) et garantit une certaine distance (a) en forme d'interstice entre la rangée d'éléments magnétiques (1) et les noyaux de bobines (3).

17. Porte coulissante selon l'une des revendications précédentes, **caractérisée en ce que** la rangée d'éléments magnétiques (1) est magnétisée parallèlement par rapport à la direction de support (z) et perpendiculairement à la direction d'entraînement (x).

18. Porte coulissante selon l'une des revendications précédentes, **caractérisée en ce que** la rangée d'éléments magnétiques (1) consiste en un ou plusieurs éléments magnétiques à haute performance.

19. Porte coulissante selon la revendication 18, **caractérisée en ce que** ledit un ou lesdits plusieurs éléments magnétiques à haute performance est/sont des éléments magnétiques à haute performance de terres rares.

20. Porte coulissante selon la revendication 19, **caractérisée en ce que** ledit un ou lesdits plusieurs éléments magnétiques à haute performance des terres rares est/sont du type NeFeB ou Sm₂Co.

21. Porte coulissante selon l'une des revendications précédentes, **caractérisée en ce que** la porte coulissante est aménagée comme porte coulissante en arc ou en cloison coulissante horizontale.
